# EUROPEAN PATENT APPLICATION

(11) **EP 3 145 237 A1**
(43) Date of publication of application: **22.03.2017**
(21) Application number: 14891731.3
(22) Date of filing: 10.09.2014
(51) Int. Cl.: H04W 24/08

(54) **PROCESSING METHOD FOR DYNAMIC CHANNEL DETECTION, STATION, AND ACCESS POINT DEVICE**

(30) Priority: 14.05.2014 CN 201410204259
(71) Applicant: ZTE Corporation, Shenzhen, Guangdong 518057 (CN)
(72) Inventor: JIANG, Anming, Shenzhen Guangdong 518057 (CN); SUN, Bo, Shenzhen Guangdong 518057 (CN); LI, Nan, Shenzhen Guangdong 518057 (CN)
(74) Representative: Awapatent AB
(86) International application number: PCT/CN2014/086226
(87) International publication number: WO 2015/172471

(57) **Abstract**

The embodiments of the present invention provide a method for processing dynamic channel detection, a station and an access point device. The method includes a station transmitting a dynamic channel detection request to an access point and the station deciding whether to use dynamic channel detection according to response information from the access point. The embodiments of the present invention enable the station and the access point to negotiate whether to use a dynamic channel detection threshold. This is advantageous in finding the best balance point between improvement of channel utilization and avoidance of collision.

## Description

### Technical Field

The present invention relates to a cross-domain of computer networks and wireless communication, and more particularly, to a method for processing dynamic channel detection, a station, and an access point device.

### Background of the Related Art

Currently, in the field of wireless networks, Wireless Local Area Networks (WLANs) develop rapidly, and the global requirements for WLAN coverage are increasingly growing. The Institute of Electrical and Electronic Engineers industrial specifications IEEE802.11 working group has defined a series of WLAN technical standards, such as the 802.11a, 802.11b, 802.11g etc., which primarily regulate specifications for the Physical Layer (PHY) and the Media Access Control (MAC) layer. Then, other task groups appear, which focus on developing specifications related to improvements of the existing 802.11 technology, for example, the High Efficiency Wlan (HEW) task group primarily focuses on how to make WLAN networks more efficient in transmission in the 2.4/5GHz band.

In a typical WLAN network, a Basic Service Set (BSS for short) is comprised of an Access Point (AP for short) and a plurality of stations (STAs for short) associated therewith. The stations may be terminal devices such as mobile phones, notebooks etc. The STAs communicate with the AP through access channels. The BSS may also be comprised of two or more stations, and various stations can communicate with each other. The STA will firstly check whether the channel is idle before it accesses the channel. If signal energy on the channel is higher than a channel detection threshold (CCA Level), the channel will be considered to be busy at this time. Only when the signal energy on the channel is lower than the channel detection threshold, the STA will perform channel access.

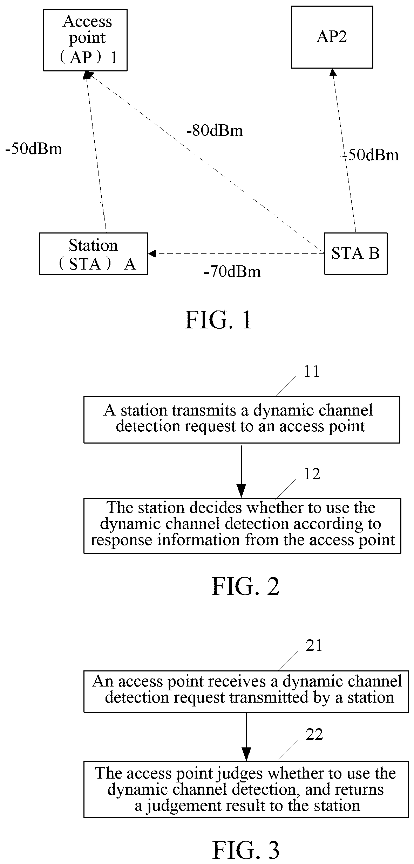

Fig. 1 is a diagram of an instance of a channel detection threshold situation in the prior art. As shown in Fig. 1, by taking a BSS of 20MHz bandwidth as an example, a channel detection threshold of an STA on a 20MHz bandwidth is -82dB. STA A detects that energy of a signal being transmitted by STA B is -70dB before transmitting data to an AP, which is higher than the channel detection threshold thereof of -82dB. It is considered that the channel is busy, and the STA A will not transmit the data to the AP. At this time, although the STA B is transmitting data to AP2, the signal energy of the STA B arriving at the AP2 is -80dB, which is much lower than the signal energy of -50dB of the STA A arriving at the AP1. Therefore, if the STA A transmits the data to the AP1 at this time, the signal energy is -50dBm when the signal arrives at the AP, and the interference to the communication between the STA A and the AP1 resulting from the communication between the STA B and the AP2 is negligible. It can be seen that the channel detection threshold set in the prior art is too high, which affects the communication efficiency of the STA A.

In view of the above condition, a concept of Dynamic Sensitivity Control (DSC for short)/dynamic channel detection is proposed in the current discussion. That is, the channel detection threshold of the STA is no longer a fixed value. Instead, the channel detection threshold of the STA itself is dynamically adjusted according to energy (RSSI) of a beacon frame received by the AP. That is to say, the closer the station is to the AP, the higher the channel detection threshold is, which shields signals below the detection threshold, thereby improving the efficiency of the station accessing the channel. Still by taking Fig. 1 as an example, the STA A detects that the energy of the signal being transmitted by the STA B is -70dB before transmitting data to an AP. After the STA A implements DSC, the channel detection threshold thereof is higher than -70dB. Therefore, the STA A ignores the signal of the STA B, and thereby accesses the channel and transmits the data to AP1.

The above DSC technology has some problems in improving the efficiency of the STA accessing the channel. For example, when there is a legacy device in the BSS, as the legacy device does not support the DSC function, a station supporting the function and a station not supporting the function have inconsistent criteria for judging whether the channel is idle. Therefore, it results in a fairness problem when the above two types of stations access channels. In addition, the DSC station will increase the channel access opportunity by increasing the CCA detection threshold, which certainly increases the probability of collision with other devices, especially for stations outside a range which can be detected by the DSC station. When such station is using a channel, it will not be heard by the DSC station. At this time, the use of the channel by the DSC station may interfere with data transmission of the station. The closer the two stations are located from each other, the higher the possibility that this situation occurs is. The more such stations are, the greater the probability of collision is.

### Summary of the Invention

The technical problem to be solved by the embodiments of the present invention is to provide a method for processing dynamic channel detection, a station and an access point device, so as to enable the station and the access point to negotiate whether to use a dynamic channel detection threshold. This is advantageous in finding the best balance point between improvement of channel utilization and avoidance of collision.

In order to solve the above technical problem, the embodiments of the present invention provide a method for processing dynamic channel detection, including:
a station transmitting a dynamic channel detection request to an access point; and
the station deciding whether to use the dynamic channel detection according to response information from the access point.

Alternatively, the dynamic channel detection request is indicated through signaling of a physical layer or a medium access control layer of a radio frame.

Alternatively, the dynamic channel detection request includes detection information of the station, and
the detection information includes:
a number of surrounding legacy devices in a basic service set in which the station is located detected by the station; and/or
a number of devices in basic service sets other than a basic service set in which the station is located detected by the station; and/or
received signal strength of a signal transmitted by an access point of a neighboring basic service set detected by the station; and/or
received signal strength of a signal transmitted by an access point of a basic service set in which the station is located detected by the station; and/or
a mean value or a minimum value of received signal strength of a neighboring basic service set or a basic service set in which the station is located detected by the station over a period of time; and/or
a result of a specified operation of received signal strength of a signal transmitted by an access point of a neighboring basic service set and received signal strength of a signal transmitted by an access point of a basic service set in which the station is located detected by the station; and/or
location information of the station.

Alternatively, when the detection information includes a result of a specified operation of received signal strength of a signal transmitted by an access point of a neighboring basic service set and received signal strength of a signal transmitted by an access point of a basic service set in which the station is located detected by the station,
the specified operation includes:
calculating a difference between a mean value or a minimum value of the received signal strength of the signal transmitted by the access point of the neighboring basic service set and a mean value or a minimum value of the received signal strength of the signal transmitted by the access point of the basic service set in which the station is located over a period of time; or
calculating a ratio between a mean value or a minimum value of the received signal strength of the signal transmitted by the access point of the neighboring basic service set and a mean value or a minimum value of the received signal strength of the signal transmitted by the access point of the basic service set in which the station is located over a period of time.

Alternatively, when the response information agrees to use the dynamic channel detection, the method further includes:
the station updating corresponding parameters according to a channel detection threshold and/or transmission power and/or a modulation mode of the station during data transmission indicated by the access point to the station in the response indication of agreeing to use the dynamic channel detection; or
updating the corresponding parameters according to a predefined policy.

Alternatively, after the station uses the dynamic channel detection according to the response information, the method further includes:
when the station receives an indication of stopping the dynamic channel detection transmitted by the access point, stopping using the dynamic channel detection; or
when the station receives an indication of stopping the dynamic channel detection when a first preset time length is reached transmitted by the access point, stopping using the dynamic channel detection when the first preset time length is reached;
herein the first preset time length is a time length greater than or equal to 0.

Alternatively, when the station receives an indication of stopping using the dynamic channel detection transmitted by the access point, the method further includes:
the station transmitting a radio frame to the access point to notify the access point that it has received an indication of stopping the dynamic channel detection and has stopped the dynamic channel detection; and
when the station receives an indication of stopping using the dynamic channel detection when a first preset time length is reached transmitted by the access point, the method further includes:
   the station transmitting a radio frame to the access point to notify the access point that it has received an indication of stopping the dynamic channel detection when the first preset time length is reached and has stopped the dynamic channel detection when the first preset time length is reached.

Alternatively, when the station receives an indication of starting dynamic channel detection transmitted by the access point, the method further includes:
the station transmitting a radio frame to the access point to notify the access point that it has received an indication of starting the dynamic channel detection and has started the dynamic channel detection; and
when the station receives an indication of starting the dynamic channel detection when a second preset time length is reached transmitted by the access point, the method further includes:
   the station transmitting a radio frame to the access point to notify the access point that it has received an indication of starting the dynamic channel detection when a second preset time length is reached and has started the dynamic channel detection when the second preset time length is reached;
   herein the second preset time length is a time length greater than or equal to 0.

In another aspect, the embodiments of the present invention further provide a station device, including:
a transmission module configured to transmit a dynamic channel detection request to an access point; and
a processing module configured to decide whether to use the dynamic channel detection according to response information from the access point.

Alternatively, the dynamic channel detection request transmitted by the transmission module is indicated through signaling of a physical layer or a medium access control layer of a radio frame.

Alternatively, the station device further includes:
a detection module configured to detect the following information:
   a number of surrounding legacy devices in a basic service set in which the station is located; and/or
   a number of devices in basic service sets other than a basic service set in which the station is located; and/or
   received signal strength of a signal transmitted by an access point of a neighboring basic service set; and/or
   received signal strength of a signal transmitted by an access point of a basic service set in which the station is located; and/or
   a mean value or a minimum value of received signal strength of a neighboring basic service set or a basic service set in which the station is located over a period of time; and/or
   received signal strength of a signal transmitted by an access point of a neighboring basic service set; and/or
   a result of a specified operation of received signal strength of a signal transmitted by an access point of a basic service set in which the station is located; and/or
   location information; herein
   the dynamic channel detection request transmitted by the transmission module includes detection information of the detection module; and
   the specified operation includes:
      calculating a difference between a mean value or a minimum value of the received signal strength of the signal transmitted by the access point of the neighboring basic service set and a mean value or a minimum value of the received signal strength of the signal transmitted by the access point of the basic service set in which the station is located over a period of time; or
      calculating a ratio between a mean value or a minimum value of the received signal strength of the signal transmitted by the access point of the neighboring basic service set and a mean value or a minimum value of the received signal strength of the signal transmitted by the access point of the basic service set in which the station is located over a period of time.

Alternatively, the station device further includes: an updating module configured to when the response information from the access point agrees to use the dynamic channel detection, update corresponding parameters according to a channel detection threshold and/or transmission power and/or a modulation mode of the station during data transmission indicated by the access point in the response indication in the radio frame which agrees to use the dynamic channel detection; or
updating the corresponding parameters according to a predefined policy.

Alternatively, the station device further includes: a first stopping module and a second stopping module, herein
the first stopping module is configured to after the station uses the dynamic channel detection according to the response information, when the station receives an indication of stopping the dynamic channel detection transmitted by the access point, stop using the dynamic channel detection; and
the second stopping module is configured to after the station uses the dynamic channel detection according to the response information, when the station receives an indication of stopping the dynamic channel detection when a first preset time length is reached transmitted by the access point, stop using the dynamic channel detection when the first preset time length is reached;
herein the first preset time length is a time length greater than or equal to 0.

Alternatively, the station device further includes: a first stopping message module and a second stopping message module, herein
the first stopping message module is configured to when receiving an indication of stopping using the dynamic channel detection transmitted by the access point, transmit a radio frame to the access point to notify the access point that it has received an indication of stopping the dynamic channel detection and has stopped using the dynamic channel detection; and
the second stopping message module is configured to when receiving an indication of stopping using the dynamic channel detection when a first preset time length is reached transmitted by the access point, transmit a radio frame to the access point to notify the access point that it has received an indication of stopping the dynamic channel detection when the first preset time length is reached and has stopped using the dynamic channel detection when the first preset time length is reached.

Alternatively, the station device further includes: a first starting message module and a second starting message module, herein
the first starting message module is configured to when receiving an indication of starting dynamic channel detection transmitted by the access point, transmit a radio frame to the access point to notify the access point that it has received an indication of starting the dynamic channel detection and has started the dynamic channel detection; and
the second starting message module is configured to when receiving an indication of starting the dynamic channel detection when a second preset time length is reached transmitted by the access point, transmit a radio frame to the access point to notify the access point that it has received an indication in the radio frame of starting the dynamic channel detection when a second preset time length is reached and has started the dynamic channel detection when the second preset time length is reached;
herein the second preset time length is a time length greater than or equal to 0.

In a further aspect, the embodiments of the present invention further provide a method for processing dynamic channel detection, including:
an access point receiving a dynamic channel detection request transmitted by a station; and
the access point judging whether to use the dynamic channel detection, and returning a judgement result to the station.

Alternatively, the access point judging whether to use the dynamic channel detection includes: judging whether to use the dynamic channel detection according to an access number of legacy devices in a basic service set and detection information of the station; and
the detection information of the station includes:
a number of surrounding legacy devices in a basic service set in which the station is located detected by the station; and/or
a number of devices in basic service sets other than a basic service set in which the station is located detected by the station; and/or
received signal strength of a signal transmitted by an access point of a neighboring basic service set detected by the station; and/or
received signal strength of a signal transmitted by an access point of a basic service set in which the station is located detected by the station; and/or
a mean value or a minimum value of received signal strength of a neighboring basic service set or a basic service set in which the station is located detected by the station over a period of time; and/or
a result of a specified operation of received signal strength of a signal transmitted by an access point of a neighboring basic service set and received signal strength of a signal transmitted by an access point of a basic service set in which the station is located detected by the station; and/or
location information of the station.

Alternatively, the access point judging whether to use the dynamic channel detection and returning a judgment result to the station includes:
when the access point finds that a number of legacy stations in stations associated therewith at this time is less than or equal to a first threshold, or
when a number of surrounding legacy devices in a basic service set in which the station is located detected by the station and/or the number of devices in basic service sets other than a basic service set in which the station is located detected by the station is less than a second threshold; or
when received signal strength of a signal transmitted by an access point of a neighboring basic service set detected by the station and/or received signal strength of a signal transmitted by an access point of a basic service set in which the station is located detected by the station is greater than a third threshold; or
when a result of a specified operation of received signal strength of a signal transmitted by an access point of a neighboring basic service set and received signal strength of a signal transmitted by an access point of a basic service set in which the station is located detected by the station is greater than a fourth threshold; or
when a mean value or a minimum value of received signal strength of a neighboring basic service set or a basic service set in which the station is located detected by the station over a period of time is greater than a fifth threshold; or
when the access point determines that a distance between the station and itself is within a specified range according to the location information of the station;
the access point responding to the station with an indication of agreeing to use the dynamic channel detection; and
if the above conditions are not satisfied, the access point responding to the station with an indication of disagreeing to use the dynamic channel detection.

Alternatively, when the response information responded by the access point to the station agrees to use the dynamic channel detection, the method further includes:
the access point indicating to the station a channel detection threshold and/or transmission power and/or a modulation mode of the station during data transmission in a radio frame of agreeing to use the dynamic channel detection responded to the station.

Alternatively, after the station uses the dynamic channel detection according to the judgment result, the method further includes: the access point transmitting an indication of stopping the dynamic channel detection to the station; and after receiving the indication of stopping the dynamic channel detection, the station stopping using the dynamic channel detection; or
the access point transmitting an indication of stopping the dynamic channel detection when a first preset time length is reached to the station; and after receiving the indication of stopping the dynamic channel detection when the first preset time length is reached, the station stopping using the dynamic channel detection when the first preset time length is reached;
herein the first preset time length is a time length greater than or equal to 0.

Alternatively, when the station does not use the dynamic channel detection, the method further includes:
the access point transmitting an indication of starting the dynamic channel detection to the station to indicate the station to start the dynamic channel detection; or
the access point transmitting an indication of starting the dynamic channel detection when a second preset time length is reached to the station to indicate the station to start the dynamic channel detection when the second preset time length is reached,
herein the second preset time length is a time length greater than or equal to 0.

Alternatively, the method further includes:
the access point multicasting or broadcasting an indication of starting or stopping the dynamic channel detection to the station associated therewith to indicate the station associated therewith to start or stop the dynamic channel detection.

In another aspect, the embodiments of the present invention further provide an access point device, including:
a receiving module configured to receive a dynamic channel detection request transmitted by a station; and
a processing module configured to judge whether to use the dynamic channel detection, and return a judgement result to the station.

Alternatively, the processing module includes a judgment unit configured to judge whether to use the dynamic channel detection according to an access number of legacy devices in a basic service set and detection information of the station; and
the detection information includes:
a detected number of surrounding legacy devices in a basic service set in which the station is located; and/or
a detected number of devices in basic service sets other than a basic service set in which the station is located; and/or
detected received signal strength of a signal transmitted by an access point of a neighboring basic service set; and/or
detected received signal strength of a signal transmitted by an access point of a basic service set in which the station is located; and/or
a detected mean value or a detected minimum value of received signal strength of a neighboring basic service set or a basic service set in which the station is located over a period of time; and/or
a detected result of a specified operation of received signal strength of a signal transmitted by an access point of a neighboring basic service set and received signal strength of a signal transmitted by an access point of a basic service set in which the station is located; and/or
location information of the station.

Alternatively, the processing module further includes a result response unit configured to when it is found that a number of legacy stations in stations associated therewith at this time is less than or equal to a first threshold, or
when a number of surrounding legacy devices in a basic service set in which the station is located detected by the station and/or the number of devices in basic service sets other than a basic service set in which the station is located detected by the station is less than a second threshold; or
when received signal strength of a signal transmitted by an access point of a neighboring basic service set detected by the station and/or received signal strength of a signal transmitted by an access point of a basic service set in which the station is located detected by the station is greater than a third threshold; or
when a result of a specified operation of received signal strength of a signal transmitted by an access point of a neighboring basic service set and received signal strength of a signal transmitted by an access point of a basic service set in which the station is located detected by the station is greater than a fourth threshold; or
when a mean value or a minimum value of received signal strength of a neighboring basic service set or a basic service set in which the station is located detected by the station over a period of time is greater than a fifth threshold; or
when it is determined that a distance between the station and the access point device is within a specified range according to the location information of the station;
respond to the station with an indication of agreeing to use the dynamic channel detection; and
if the above conditions are not satisfied, respond to the station with an indication of disagreeing to use the dynamic channel detection.

Alternatively, the result response unit is further configured to when the response information responded to the station agrees to use the dynamic channel detection, indicate to the station a channel detection threshold, transmission power and a modulation mode of the station during data transmission in an indication of agreeing to use the dynamic channel detection responded to the station, so that after receiving the radio frame from the access point, the station updates corresponding parameters according to the channel detection threshold and/or the transmission power and/or the modulation mode indicated in the received indication; or
updates the corresponding parameters according to a predefined policy.

Alternatively, the access point device further includes a first stopping instruction module and a second stopping instruction module, herein
the first stopping instruction module is configured to after the station uses the dynamic channel detection according to the judgment result, transmit an indication of stopping the dynamic channel detection to the station, so that after receiving the indication of stopping the dynamic channel detection, the station stops using the dynamic channel detection; and
the second stopping instruction module is configured to after the station uses the dynamic channel detection according to the judgment result, transmit an indication of stopping the dynamic channel detection when a first preset time length is reached to the station, so that after receiving the indication of stopping the dynamic channel detection when the first preset time length is reached, the station stops using the dynamic channel detection when the first preset time length is reached;
herein the first preset time length is a time length greater than or equal to 0.

Alternatively, the access point device further includes a first starting instruction module, a second starting instruction module and a third instruction module, herein
the first starting instruction module is configured to when the station does not use the dynamic channel detection, transmit an indication of starting the dynamic channel detection to the station to indicate the station to start the dynamic channel detection; and
the second starting instruction module is configured to when the station does not use the dynamic channel detection, transmit an indication of starting the dynamic channel detection when a second preset time length is reached to the station to indicate the station to start the dynamic channel detection when the second preset time length is reached,
herein the second preset time length is a time length greater than or equal to 0.

Alternatively, the access point device further includes a third instruction module, configured to multicast or broadcast an indication of starting or stopping the dynamic channel detection to the station associated therewith to indicate the station associated therewith to start or stop the dynamic channel detection.

In a further aspect, the present application further provides a method for processing dynamic channel detection, including:
a station updating a dynamic channel detection state according to a predefined policy.

Alternatively, the predefined policy includes: measurement data of the station itself, indication information of an access point, or indication information of other stations in communication with the station; and
herein the indication information is information of starting dynamic channel detection or stopping the dynamic channel detection, and/or updating related parameters of the dynamic channel detection.

Alternatively, after the station updates the dynamic channel detection state, the method further includes: reporting the updated dynamic channel detection state to the access point.

Alternatively, when the indication information is information of starting the dynamic channel detection, the station updating a dynamic channel detection state according to a predefmed policy includes the station determining whether to update the dynamic channel detection state according to the measurement data of itself; and
when the indication information is information of stopping the dynamic channel detection, the station updating a dynamic channel detection state according to a predefmed policy includes when the dynamic channel detection state of the station is a stopped state, the station not updating the dynamic channel detection state; and when the dynamic channel detection state of the station is a started state, updating the dynamic channel detection state of the station to a stopped state of the dynamic channel detection.

Alternatively, the measurement data of the station itself includes:
a number of surrounding legacy devices in a basic service set in which the station is located detected by the station; and/or
a number of devices in basic service sets other than a basic service set in which the station is located detected by the station; and/or
received signal strength of a signal transmitted by an access point of a neighboring basic service set detected by the station; and/or
received signal strength of a signal transmitted by an access point of a basic service set in which the station is located detected by the station; and/or
a mean value or a minimum value of received signal strength of a neighboring basic service set or a basic service set in which the station is located detected by the station over a period of time; and/or
an acquired result of a specified operation of received signal strength of a signal transmitted by an access point of a neighboring basic service set and received signal strength of a signal transmitted by an access point of a basic service set in which the station is located detected by the station; and/or
location information of the access point.

Alternatively, the specified operation includes:
calculating a difference between a mean value or a minimum value of the received signal strength of the signal transmitted by the access point of the neighboring basic service set and a mean value or a minimum value of the received signal strength of the signal transmitted by the access point of the basic service set in which the station is located over a period of time; or
calculating a ratio between a mean value or a minimum value of the received signal strength of the signal transmitted by the access point of the neighboring basic service set and a mean value or a minimum value of the received signal strength of the signal transmitted by the access point of the basic service set in which the station is located over a period of time.

Alternatively, the station updating the dynamic channel detection state according to the measurement data of itself includes:
when a number of surrounding legacy devices in a basic service set in which the station is located detected by the station and/or the number of devices in basic service sets other than a basic service set in which the station is located detected by the station is less than a first threshold; or
when received signal strength of a signal transmitted by an access point of a neighboring basic service set detected by the station and/or received signal strength of a signal transmitted by an access point of a basic service set in which the station is located detected by the station is greater than a second threshold; or
when an acquired result of a specified operation of received signal strength of a signal transmitted by an access point of a neighboring basic service set and received signal strength of a signal transmitted by an access point of a basic service set in which the station is located detected by the station is greater than a third threshold; or
when a mean value or a minimum value of received signal strength of a neighboring basic service set or a basic service set in which the station is located detected by the station over a period of time is greater than a fourth threshold; or
when it is determined that a distance between the access point and itself is within a specified range according to the location information of the access point;
the station updating the dynamic channel detection state to a started state of the dynamic channel detection; and
if the above conditions are not satisfied, updating the dynamic channel detection state of the station to a stopped state of the dynamic channel detection.

Alternatively, the related parameters comprise:
related parameters of a dynamic channel detection threshold, related parameters of transmission power and related parameters of a modulation mode.

Alternatively, the method further includes:
when the station receives indication information of stopping the dynamic channel detection when a first preset time length is reached transmitted by the access point, the station stopping the dynamic channel detection when the first preset time length is reached;
herein the first preset time length is a time length greater than or equal to 0.

Alternatively, the method further includes:
when the station receives indication information of starting the dynamic channel detection when a second preset time length is reached transmitted by the access point and updates the dynamic channel detection state to a started state of the dynamic channel detection according to the received indication information, the station starting the dynamic channel detection when the second preset time length is reached;
herein the second preset time length is a time length greater than or equal to 0.

In a further aspect, the present application further provides a station device for dynamic channel detection, including:
a state updating module configured to update a dynamic channel detection state according to a predefined policy.

Alternatively, the state updating module is further configured to update the dynamic channel detection state according to measurement data of the station itself, or indication information of an access point, or indication information of other stations in communication with the station; and
herein the indication information is information of starting dynamic channel detection or stopping the dynamic channel detection, and/or updating related parameters of the dynamic channel detection.

Alternatively, the station device further includes an update reporting module configured to after the state updating module updates the dynamic channel detection state, report the updated dynamic channel detection state to the access point.

Alternatively, the state updating module further includes an indication starting unit and an indication closure unit, herein
the starting judgment unit is configured to when the indication information is information of starting the dynamic channel detection, update the dynamic channel detection state according to the measurement data of the station itself; and
the ending judgment unit is configured to when the indication information is information of stopping the dynamic channel detection and the dynamic channel detection state of the station itself is a stopped state, not update the dynamic channel detection state of the station; and when the dynamic channel detection state of the station itself is a started state, update the dynamic channel detection state of the station to a stopped state of the dynamic channel detection.

Alternatively, the measurement data of the station itself includes:
a number of surrounding legacy devices in a basic service set in which the station is located detected by the station; and/or
a number of devices in basic service sets other than a basic service set in which the station is located detected by the station; and/or
received signal strength of a signal transmitted by an access point of a neighboring basic service set detected by the station; and/or
received signal strength of a signal transmitted by an access point of a basic service set in which the station is located detected by the station; and/or
a mean value or a minimum value of received signal strength of a neighboring basic service set or a basic service set in which the station is located detected by the station over a period of time; and/or
an acquired result of a specified operation of received signal strength of a signal transmitted by an access point of a neighboring basic service set and received signal strength of a signal transmitted by an access point of a basic service set in which the station is located detected by the station; and/or
location information of the access point; and
the specified operation includes:
   calculating a difference between a mean value or a minimum value of the received signal strength of the signal transmitted by the access point of the neighboring basic service set and a mean value or a minimum value of the received signal strength of the signal transmitted by the access point of the basic service set in which the station is located over a period of time; or
   calculating a ratio between a mean value or a minimum value of the received signal strength of the signal transmitted by the access point of the neighboring basic service set and a mean value or a minimum value of the received signal strength of the signal transmitted by the access point of the basic service set in which the station is located over a period of time.

Alternatively, the starting judgment unit is further configured to:
when a number of surrounding legacy devices in a basic service set in which the station is located detected by the station and/or the number of devices in basic service sets other than a basic service set in which the station is located detected by the station itself is less than a first threshold; or
when received signal strength of a signal transmitted by an access point of a neighboring basic service set detected by the station and/or received signal strength of a signal transmitted by an access point of a basic service set in which the station is located received by the station is greater than a second threshold; or
when an acquired result of a specified operation of received signal strength of a signal transmitted by an access point of a neighboring basic service set and received signal strength of a signal transmitted by an access point of a basic service set in which the station is located detected by the station is greater than a third threshold; or
when a mean value or a minimum value of received signal strength of a neighboring basic service set or a basic service set in which the station is located detected by the station over a period of time is greater than a fourth threshold; or
when it is determined that a distance between the access point and itself is within a specified range according to the location information of the access point;
update the dynamic channel detection state to a started state of the dynamic channel detection; and
if the above conditions are not satisfied, update the dynamic channel detection state to a stopped state of the dynamic channel detection.

Alternatively, the related parameters comprise:
related parameters of a dynamic channel detection threshold, related parameters of transmission power and related parameters of a modulation mode.

Alternatively, the station device further includes a second stopping module configured to:
when receiving indication information of stopping the dynamic channel detection when a first preset time length is reached transmitted by the access point, stop the dynamic channel detection when the first preset time length is reached;
herein the first preset time length is a time length greater than or equal to 0.

Alternatively, the station device further includes a starting message module configured to:
when receiving indication information of starting the dynamic channel detection when a second preset time length is reached transmitted by the access point and updating the dynamic channel detection state to a started state of the dynamic channel detection according to the received indication information, start the dynamic channel detection when the second preset time length is reached;
herein the second preset time length is a time length greater than or equal to 0.

In a further aspect, the present application further provides a method for processing dynamic channel detection, including: an access point transmitting indication information of updating a dynamic channel detection state to a station to indicate the station to update the dynamic channel detection state, herein
the indication information is starting dynamic channel detection or stopping the dynamic channel detection, and/or updating related parameters of the dynamic channel detection.

Alternatively, the method further includes: the access point performing recording according to a state update of the dynamic channel detection reported by the station.

Alternatively, before the method, the following steps are further comprised:
the access point transmitting the indication information to the station according to a local predefined policy of the access point or an external instruction of the access point; herein
the local predefined policy of the access point includes a policy predefined according to local measurement data of the access point; and
the external instruction of the access point includes an instruction for a User Interface (UI).

Alternatively, the indication information is indicated by signaling of a physical layer or signaling of a medium access control layer of a radio frame.

Alternatively, the local measurement data of the access point includes:
a number of devices in basic service sets of other access points surrounding the access point; and/or
access points of a neighboring basic service set of the access point; and/or
received signal strength of a signal transmitted by a station of a neighboring basic service set; and/or
a number of legacy devices in the basic service set of the access point and/or a number of devices in basic service sets of other access points; and/or
location information of the station to which the access point transmits the indication information.

Alternatively, the access point transmitting the indication information to the station according to a local predefined policy of the access point includes:
when a number of devices in basic service sets of other access points surrounding the access point is less than a fifth threshold; or
when access points of a neighboring basic service set of the access point and/or received signal strength of a signal transmitted by a station of a neighboring basic service set is greater than a sixth threshold; or
when a number of legacy devices in the basic service set of the access point and/or a number of devices in basic service sets of other access points is less than a seventh threshold; or
when the access point determines that a distance between the station and itself is within a specified range according to the location information of the station to which the access point transmits the indication information,
the access point transmitting indication information of starting the dynamic channel detection to the station; and
if the above conditions are not satisfied, the access point transmitting indication information of stopping the dynamic channel detection to the station.

Alternatively, the related parameters comprise related parameters of a dynamic channel detection threshold, related parameters of transmission power, and related parameters of a modulation mode.

Alternatively, the method further includes: the access point transmitting indication information of stopping the dynamic channel detection when a first preset time length is reached to the station, herein
the first preset time length is a time length greater than or equal to 0.

Alternatively, the method further includes:
the access point transmitting indication information of starting the dynamic channel detection when a second preset time length is reached to the station, herein
the second preset time length is a time length greater than or equal to 0.

Alternatively, the method further includes:
the access point multicasting or broadcasting an indication of starting or stopping the dynamic channel detection to the station associated therewith to indicate the station associated therewith to start or stop the dynamic channel detection.

In another aspect, the present application further provides an access point device for dynamic channel detection, including: an indication information module, configured to transmit indication information of updating a dynamic channel detection state to a station to indicate the station to update the dynamic channel detection state, herein
the indication information is starting dynamic channel detection or stopping the dynamic channel detection, and/or updating related parameters of the dynamic channel detection.

Alternatively, the access point device further includes: a recording module configured to perform recording according to a state update of the dynamic channel detection reported by the station.

Alternatively, the access point device further includes: an indication basis module configured to transmit the indication information to the station according to a local predefined policy of the access point or an external instruction of the access point; herein
the local predefined policy of the access point includes a policy predefined according to local measurement data of the access point; and
the external instruction of the access point includes an instruction for a User Interface (UI).

Alternatively, the indication information is indicated by signaling of a physical layer or signaling of a medium access control layer of a radio frame.

Alternatively, the local measurement data of the access point includes:
a number of devices in basic service sets of other access points surrounding the access point; and/or
access points of a neighboring basic service set of the access point; and/or
received signal strength of a signal transmitted by a station of a neighboring basic service set; and/or
when a number of legacy devices in the basic service set of the access point and/or a number of devices in basic service sets of other access points; and/or
location information of the station to which the access point transmits the indication information.

Alternatively, the indication basis module is further configured to:
when a number of devices in basic service sets of other access points surrounding the access point is less than a fifth threshold; or
when access points of a neighboring basic service set of the access point and/or received signal strength of a signal transmitted by a station of a neighboring basic service set is greater than a sixth threshold; or
when a number of legacy devices in the basic service set of the access point and/or a number of devices in basic service sets of other access points is less than a seventh threshold; or
when it is determined that a distance between the station and the access point is within a specified range according to the location information of the station to which the access point device transmits the indication information,
transmit indication information of starting the dynamic channel detection to the station; and if the above conditions are not satisfied, the access point transmit indication information of stopping the dynamic channel detection to the station, or transmit the indication information to the station according to an external instruction.

Alternatively, the related parameters comprise related parameters of a dynamic channel detection threshold, related parameters of transmission power, and related parameters of a modulation mode.

Alternatively, the access point device further includes: a second stopping instruction module, herein
the second stopping instruction module is configured to transmit indication information of stopping the dynamic channel detection when a first preset time length is reached to the station, herein

the first preset time length is a time length greater than or equal to 0.

Alternatively, the access point device further includes: a second starting instruction module configured to transmit indication information of starting the dynamic channel detection when a second preset time length is reached to the station, to indicate the station to start the dynamic channel detection when the second preset time length is reached, herein
the second preset time length is a time length greater than or equal to 0.

Alternatively, the access point device further includes: a third instruction module configured to multicast or broadcast indication information of starting or stopping the dynamic channel detection to the station associated therewith to indicate the station associated therewith to start or stop the dynamic channel detection.

The present application provides a technical solution, including a station transmitting a dynamic channel detection request to an access point and the station deciding whether to use dynamic channel detection according to response information from the access point. The invention provides a method for processing dynamic channel detection, a station and an access point device, which can enable the station and the access point to negotiate whether to use a dynamic channel detection threshold. This is advantageous in finding the best balance point between improvement of channel utilization and avoidance of collision.

### Brief Description of Drawings

Fig. 1 is a diagram of an instance of a channel detection threshold situation in the prior art;
Fig. 2 is a flowchart of a method for processing dynamic channel detection at a station side according to an embodiment of the present invention;
Fig. 3 is a flowchart of a method for processing dynamic channel detection at an access point side according to an embodiment of the present invention;
Fig. 4 is a diagram of a station device according to an embodiment of the present invention;
Fig. 5 is a diagram of an access point device according to an embodiment of the present invention;

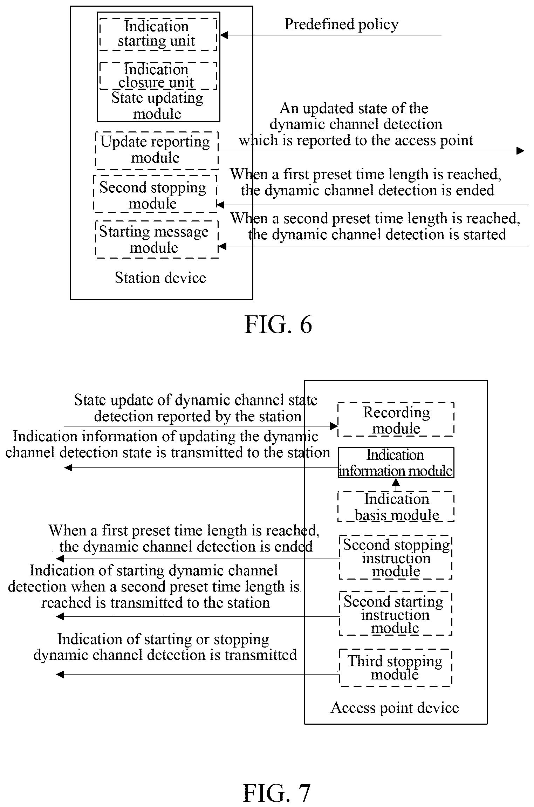

Fig. 6 is a diagram of a station device according to another embodiment of the present invention; and
Fig. 7 is a diagram of an access point device according to another embodiment of the present invention.

### Preferred Embodiments of the Present Invention

In order to make the purpose, technical solutions and advantages of the present invention more clear and apparent, the embodiments of the present invention will be described in detail hereinafter with reference to accompanying drawings. It should be illustrated that the embodiments in the present application and the features in the embodiments can be combined with each other randomly without conflict.

Fig. 2 is a flowchart of a method for processing dynamic channel detection at a station side according to an embodiment of the present invention. As shown in Fig. 2, the method according to the present embodiment includes the following steps.

In S11, the station transmits a dynamic channel detection request to an access point.

In this step, the dynamic channel detection request may be indicated through signaling of a physical layer or a medium access control layer of a radio frame.

Alternatively, the dynamic channel detection request includes detection information of the station, and
the detection information includes:
a number of surrounding legacy devices in a basic service set in which the station is located detected by the station; and/or
a number of devices in basic service sets other than a basic service set in which the station is located detected by the station; and/or
received signal strength of a signal transmitted by an access point of a neighboring basic service set detected by the station; and/or
received signal strength of a signal transmitted by an access point of a basic service set in which the station is located detected by the station; and/or
a mean value or a minimum value of received signal strength of a neighboring basic service set or a basic service set in which the station is located detected by the station over a period of time; and/or
a result of a specified operation of received signal strength of a signal transmitted by an access point of a neighboring basic service set and received signal strength of a signal transmitted by an access point of a basic service set in which the station is located detected by the station; and/or
location information of the station.

When the detection information includes a result of a specified operation of received signal strength of a signal transmitted by an access point of a neighboring basic service set and received signal strength of a signal transmitted by an access point of a basic service set in which the station is located detected by the station,
the specified operation includes:
calculating a difference between a mean value or a minimum value of the received signal strength of the signal transmitted by the access point of the neighboring basic service set and a mean value or a minimum value of the received signal strength of the signal transmitted by the access point of the basic service set in which the station is located over a period of time; or
calculating a ratio between a mean value or a minimum value of the received signal strength of the signal transmitted by the access point of the neighboring basic service set and a mean value or a minimum value of the received signal strength of the signal transmitted by the access point of the basic service set in which the station is located over a period of time.

In S12, the station decides whether to use the dynamic channel detection according to response information from the access point.

When the response information from the access point to the station agrees to use the dynamic channel detection, the method according to the embodiments of the present invention further includes:
the station updating corresponding parameters according to a channel detection threshold and/or transmission power and/or a modulation mode of the station during data transmission indicated by the access point to the station in the response indication of agreeing to use the dynamic channel detection; or
updating the corresponding parameters according to a predefined policy.

It should be illustrated that the predefined policy belongs to common knowledge in the art, which primarily relates to achieve setting of the system using a certain algorithm of presetting a channel detection threshold, transmission power, a modulation mode etc. or a method of setting a parameter range.

After the station uses the dynamic channel detection according to the response information, the method according to the embodiments of the present invention further includes:
when the station receives an indication of stopping the dynamic channel detection transmitted by the access point, stopping using the dynamic channel detection.

After the station uses the dynamic channel detection according to the response information, the method according to the embodiments of the present invention further includes:
when the station receives an indication of stopping the dynamic channel detection when a first preset time length is reached transmitted by the access point, stopping using the dynamic channel detection when the first preset time length is reached;
herein the first preset time length is a time length greater than or equal to 0.

When the station receives an indication of stopping using the dynamic channel detection transmitted by the access point, the method according to the embodiments of the present invention further includes:
the station transmitting a radio frame to the access point to notify the access point that it has received an indication of stopping the dynamic channel detection and has stopped the dynamic channel detection.

When the station receives an indication of stopping using the dynamic channel detection when a first preset time length is reached transmitted by the access point, the method according to the embodiments of the present invention further includes:
the station transmitting a radio frame to the access point to notify the access point that it has received an indication of stopping the dynamic channel detection when the first preset time length is reached and has stopped the dynamic channel detection when the first preset time length is reached.

When the station receives an indication of starting dynamic channel detection transmitted by the access point, the method according to the embodiments of the present invention further includes:
the station transmitting a radio frame to the access point to notify the access point that it has received an indication of starting the dynamic channel detection and has started the dynamic channel detection.

When the station receives an indication of starting the dynamic channel detection when a second preset time length is reached transmitted by the access point, the method according to the embodiments of the present invention further includes:
the station transmitting a radio frame to the access point to notify the access point that it has received an indication of starting the dynamic channel detection when a second preset time length is reached and has started the dynamic channel detection when the second preset time length is reached.

Fig. 3 is a flowchart of a method for processing dynamic channel detection at an access point side according to an embodiment of the present invention. As shown in Fig. 3, the method according to the present embodiment may comprise the following steps.

In S21, an access point receives a dynamic channel detection request transmitted by a station; and
in S22, the access point judges whether to use the dynamic channel detection, and returns a judgement result to the station.

In this step, the access point judging whether to use the dynamic channel detection includes: judging whether to use the dynamic channel detection according to an access number of legacy devices in a basic service set of the access point and detection information of the station; and
the detection information of the station includes:
a number of surrounding legacy devices in a basic service set in which the station is located detected by the station; and/or
a number of devices in basic service sets other than a basic service set in which the station is located detected by the station; and/or
received signal strength of a signal transmitted by an access point of a neighboring basic service set detected by the station; and/or
received signal strength of a signal transmitted by an access point of a basic service set in which the station is located detected by the station; and/or
a mean value or a minimum value of received signal strength of a neighboring basic service set or a basic service set in which the station is located detected by the station over a period of time; and/or
a result of a specified operation of received signal strength of a signal transmitted by an access point of a neighboring basic service set and received signal strength of a signal transmitted by an access point of a basic service set in which the station is located detected by the station; and/or
location information of the station.

The access point judging whether to use the dynamic channel detection and returning a judgment result to the station includes:
when the access point finds that a number of legacy stations in stations associated therewith at this time is less than or equal to a first threshold, or
when a number of surrounding legacy devices in a basic service set in which the station is located detected by the station and/or the number of devices in basic service sets other than a basic service set in which the station is located detected by the station is less than a second threshold; or
when received signal strength of a signal transmitted by an access point of a neighboring basic service set detected by the station and/or received signal strength of a signal transmitted by an access point of a basic service set in which the station is located received by the station is greater than a third threshold; or
when a result of a specified operation of received signal strength of a signal transmitted by an access point of a neighboring basic service set and received signal strength of a signal transmitted by an access point of a basic service set in which the station is located detected by the station is greater than a fourth threshold; or
when a mean value or a minimum value of received signal strength of a neighboring basic service set or a basic service set in which the station is located detected by the station over a period of time is greater than a fifth threshold value; or
when the access point determines that a distance between the station and itself is within a specified range according to the location information of the station;
the access point responding to the station with an indication of agreeing to use the dynamic channel detection; and
if the above conditions are not satisfied, the access point responding to the station with an indication of disagreeing to use the dynamic channel detection.

When the response from the access point to the station agrees to use the dynamic channel detection, the method according to the embodiments of the present invention further includes:
the access point indicating to the station a channel detection threshold and/or transmission power and/or a modulation mode of the station during data transmission in an indication of agreeing to use the dynamic channel detection responded to the station.

After the station uses the dynamic channel detection according to the judgment result, the method according to the embodiments of the present invention further includes: the access point transmitting an indication of stopping the dynamic channel detection to the station; and after receiving the indication of stopping the dynamic channel detection, the station stopping using the dynamic channel detection.

After the station uses the dynamic channel detection according to the judgment result, the method according to the embodiments of the present invention further includes: the access point transmitting an indication of stopping the dynamic channel detection when a first preset time length is reached to the station; and after receiving the indication of stopping the dynamic channel detection when the first preset time length is reached, the station stopping using the dynamic channel detection when the first preset time length is reached;
herein the first preset time length is a time length greater than or equal to 0.

When the station does not use the dynamic channel detection, the method according to the embodiments of the present invention further includes:
the access point transmitting an indication of starting the dynamic channel detection to the station to indicate the station to start the dynamic channel detection.

When the station does not use the dynamic channel detection, the method according to the embodiments of the present invention further includes:
the access point transmitting an indication of starting the dynamic channel detection when a second preset time length is reached to the station to indicate the station to start the dynamic channel detection when the second preset time length is reached,
herein the second preset time length is a time length greater than or equal to 0.

The method according to the embodiments of the present invention further includes:
the access point transmitting an indication of starting or stopping the dynamic channel detection to the station to indicate the station to start or stop the dynamic channel detection; or
the access point broadcasting an indication of starting or stopping the dynamic channel detection to the station associated therewith to indicate the station associated therewith to start or stop the dynamic channel detection.

It should be illustrated that in the communication process, the access point can receive an external instruction or an upper-level instruction or a BSS internal situation and transmits indication information to a station or all stations under the BSS, and the station decides whether to carry out dynamic channel detection according to the indication information. A station associated with the access point refers to a station where the dynamic channel detection is or is not performed when communicating with the access point. There may be one or more stations.

The method for processing dynamic channel detection according to the present invention will be described in detail below with reference to several specific embodiments.

### Embodiment 1

In the present embodiment, an AP judges whether to use dynamic channel detection based on a number of legacy stations within the BSS.

In this embodiment, an access point AP and a plurality of stations STA associated therewith constitute a BSS. STA1 in the BSS transmits a radio frame to the AP to request for dynamic channel detection. After receiving the request, the AP finds that a number of legacy STAs of STAs associated therewith at this time does not exceed a threshold, and responds a radio frame to the STA1 to allow the STA1 to use DSC. Then, the STA1 uses the dynamic channel detection threshold.

### Embodiment 2

In the present embodiment, an AP judges whether to use dynamic channel detection based on a number of surrounding legacy devices in the BSS and/or a number of other BSS devices detected by the station.

In the present embodiment, an access point AP and a plurality of stations STA associated therewith constitute a BSS. STA1 parses all the radio frames which can be detected by itself, and determines whether the radio frame is transmitted by a legacy device in the BSS or is transmitted by another BSS device according to an address carried in the radio frame. Thereby, the STA1 statically calculates the number of surrounding legacy devices of itself in the BSS and/or the number of other BSS devices.

Then, the STA1 transmits a radio frame to the AP to request for dynamic channel detection. The radio frame includes the number of surrounding legacy devices in the BSS and/or the number of other BSS devices detected by itself. After receiving the request, the AP finds that the number of surrounding legacy devices of the STA1 in the BSS and/or the number of other BSS devices is greater than the set threshold, and responds a radio frame to the STA1 which does not allow the STA1 to use DSC. Then, the STA1 uses a fixed CCA threshold. If it finds that the number of surrounding legacy devices of the STA1 in the BSS and/or the number of other BSS devices is less than or equal to the set threshold, the AP responds a radio frame to the STA1 to allow the STA1 to use DSC. Then, the STA1 uses the dynamic channel detection threshold.

### Embodiment 3

In the present embodiment, an AP judges whether to use dynamic channel detection based on received signal strength of a neighboring BSS, received signal strength of the BSS, or a result of a specified operation of the received signal strength of the neighboring BSS and received signal strength of the BSS.

The received signal strength of the neighboring BSS refers to received signal strength of a signal transmitted by an AP of the neighboring BSS and received by the STA. The received signal strength of the BSS refers to received signal strength of a signal transmitted by an AP of the BSS and received by the STA.

In the present embodiment, an access point AP and a plurality of stations STA associated therewith constitute a BSS. STA1 uses the received signal strength of the signal transmitted by the AP and/or an AP of the neighboring BSS as a reference value, and measures a mean of the received signal strength of the signal transmitted by the AP and/or an AP of the neighboring BSS over a period of time. Then, the STA1 transmits a radio frame to the AP to request for dynamic channel detection, herein the radio frame includes received signal strength of a neighboring BSS and/or received signal strength of the BSS detected by the STA1. After receiving the request, the AP finds that the mean is greater than the set threshold, and responds a radio frame to the STA1 to allow the STA1 to use the DSC. Then, the STA1 uses the dynamic channel detection threshold.

In addition, the STA may also use a result of a specified operation of received signal strength of a neighboring BSS and received signal strength of the BSS as a reference value. The specified operation may be calculating a difference between a mean of the received signal strength of the signal transmitted by the neighboring AP and a mean of the received signal strength of the signal transmitted by the AP over a period of time; calculating a minimum of differences between a mean of the received signal strength of the signal transmitted by the neighboring AP and a mean of the received signal strength of the signal transmitted by the AP through multiple measurements; calculating a ratio between a mean of the received signal strength of the signal transmitted by the neighboring AP and a mean of the received signal strength of the signal transmitted by the AP over a period of time etc.

When the result of the operation is greater than the threshold, the AP responds a radio frame to the STA1 to allow the STA1 to use the DSC. When the operation result is less than or equal to the threshold, the STA1 uses a fixed CCA threshold.

### Embodiment 4

In the present embodiment, the AP judges whether to use dynamic channel detection based on location information.

In the present embodiment, an access point AP and a plurality of stations STA associated therewith constitute a BSS. STA1 in the BSS transmits a radio frame to the AP to request for dynamic channel detection. The request frame includes location information of the STA1. After receiving the request, the AP determines a distance L between itself and the STA1 based on the location information. If L is less than threshold 1, the access point responds to the station with an indication of not agreeing to use dynamic channel detection and tells the station a fixed channel detection threshold 1 to be used; when L is greater than threshold 1 and less than threshold 2, the access point responds to the station with an indication of agreeing to use dynamic channel detection; and when L is greater than threshold 2, the access point responds to the station with an indication of not agreeing to use dynamic channel detection and tells the station a fixed channel detection threshold 2 to be used.

### Example 5

In this embodiment, an access point AP and a plurality of stations STA associated therewith constitute a BSS. STA1 in the BSS transmits a radio frame to the AP to request for dynamic channel detection. After receiving the request, the AP responds a radio frame to the STA1 to allow the STA1 to use DSC, and tells the STA1 to use new parameters such as a channel detection threshold, transmission power, a modulation mode etc. Then, the STA1 updates its own channel detection threshold, transmission power, and modulation scheme.

It is to be pointed out that in the above-mentioned five embodiments, the AP can judge whether to use dynamic channel detection through a judgment criterion of a single embodiment or determine whether to use dynamic channel detection by combining multiple criteria of the judgment criteria of the above-described four embodiments.

The embodiments of the present invention further provide a method for processing dynamic channel detection, including:
a station updating a dynamic channel detection state according to a predefined policy.

The predefined policy includes: measurement data of the station itself, indication information of an access point, or indication information of other stations in communication with the station; and
herein the indication information is information of starting dynamic channel detection or stopping the dynamic channel detection, and/or updating related parameters of the dynamic channel detection. Here, the related parameters comprise: related parameters of a dynamic channel detection threshold, related parameters of transmission power and related parameters of a modulation mode.

When the indication information is information of starting the dynamic channel detection, the station updating a dynamic channel detection state according to a predefined policy includes the station determining whether to update the dynamic channel detection state according to the measurement data of itself; and
when the indication information is information of stopping the dynamic channel detection, the station updating a dynamic channel detection state according to a predefined policy includes when the dynamic channel detection state of the station is a stopped state, the station not updating the dynamic channel detection state; and when the dynamic channel detection state of the station is a started state, updating the dynamic channel detection state of the station to a stopped state of the dynamic channel detection.

Here, the measurement data of the station itself includes:
a number of surrounding legacy devices in a basic service set in which the station is located detected by the station; and/or
a number of devices in basic service sets other than a basic service set in which the station is located detected by the station; and/or
received signal strength of a signal transmitted by an access point of a neighboring basic service set detected by the station; and/or
received signal strength of a signal transmitted by an access point of a basic service set in which the station is located detected by the station; and/or
a mean value or a minimum value of received signal strength of a neighboring basic service set or a basic service set in which the station is located detected by the station over a period of time; and/or
an acquired result of a specified operation of received signal strength of a signal transmitted by an access point of a neighboring basic service set and received signal strength of a signal transmitted by an access point of a basic service set in which the station is located detected by the station; and/or
location information of the access point.

Alternatively, the specified operation includes:
calculating a difference between a mean value or a minimum value of the received signal strength of the signal transmitted by the access point of the neighboring basic service set and a mean value or a minimum value of the received signal strength of the signal transmitted by the access point of the basic service set in which the station is located over a period of time; or
calculating a ratio between a mean value or a minimum value of the received signal strength of the signal transmitted by the access point of the neighboring basic service set and a mean value or a minimum value of the received signal strength of the signal transmitted by the access point of the basic service set in which the station is located over a period of time.

After the station updates the dynamic channel detection state, the method according to the embodiments of the present invention further includes: reporting the updated dynamic channel detection state to the access point.

Alternatively, the station updating the dynamic channel detection state according to the measurement data of itself includes:
when a number of surrounding legacy devices in a basic service set in which the station is located detected by the station and/or the number of devices in basic service sets other than a basic service set in which the station is located detected by the station is less than a first threshold; or
when received signal strength of a signal transmitted by an access point of a neighboring basic service set detected by the station and/or received signal strength of a signal transmitted by an access point of a basic service set in which the station is located received by the station is greater than a second threshold; or
when an acquired result of a specified operation of received signal strength of a signal transmitted by an access point of a neighboring basic service set and received signal strength of a signal transmitted by an access point of a basic service set in which the station is located detected by the station is greater than a third threshold; or
when a mean value or a minimum value of received signal strength of a neighboring basic service set or a basic service set in which the station is located detected by the station over a period of time is greater than a fourth threshold value; or
when it is determined that a distance between the access point and itself is within a specified range according to the location information of the access point;
the station updating the dynamic channel detection state to a started state of the dynamic channel detection; and
if the above conditions are not satisfied, updating the dynamic channel detection state of the station to a stopped state of the dynamic channel detection.

The related parameters comprise:
related parameters of a dynamic channel detection threshold, related parameters of transmission power and related parameters of a modulation mode.

The method according to the embodiments of the present invention further includes:
when the station receives indication information of stopping the dynamic channel detection when a first preset time length is reached transmitted by the access point, the station stopping the dynamic channel detection when the first preset time length is reached;
herein the first preset time length is a time length greater than or equal to 0.

The method according to the embodiments of the present invention further includes:
when the station receives indication information of starting the dynamic channel detection when a second preset time length is reached transmitted by the access point and updates the dynamic channel detection state to a started state of the dynamic channel detection according to the received indication information, the station starting the dynamic channel detection when the second preset time length is reached;
herein the second preset time length is a time length greater than or equal to 0.

The embodiments of the present invention further provide a method for processing dynamic channel detection, including: an access point transmitting indication information of updating a dynamic channel detection state to a station to indicate the station to update the dynamic channel detection state, herein
the indication information is starting dynamic channel detection or stopping the dynamic channel detection, and/or updating related parameters of the dynamic channel detection.

The related parameters comprise: related parameters of a dynamic channel detection threshold, related parameters of transmission power and related parameters of a modulation mode.

The method according to the embodiments of the present invention further includes: the access point performing recording according to a state update of the dynamic channel detection reported by the station.

Before the method according to the embodiments of the present invention, the following steps are further comprised:
the access point transmitting the indication information to the station according to a local predefined policy of the access point or an external instruction of the access point; herein
the local predefined policy of the access point includes a policy predefined according to local measurement data of the access point; and
the local measurement data of the access point includes:
   a number of devices in basic service sets of other access points surrounding the access point; and/or
   access points of a neighboring basic service set of the access point; and/or
   received signal strength of a signal transmitted by a station of a neighboring basic service set; and/or
   when a number of legacy devices in the basic service set of the access point and/or a number of devices in basic service sets of other access points; and/or
   location information of the station to which the access point transmits the indication information.

The external instruction of the access point includes an instruction for a User Interface (UI).

The indication information is indicated by signaling of a physical layer or signaling of a medium access control layer of a radio frame.

The access point transmitting the indication information to the station according to a local predefined policy of the access point includes:
when a number of devices in basic service sets of other access points surrounding the access point is less than a fifth threshold; or
when access points of a neighboring basic service set of the access point and/or received signal strength of a signal transmitted by a station of a neighboring basic service set is greater than a sixth threshold; or
when a number of legacy devices in the basic service set of the access point and/or a number of devices in basic service sets of other access points is less than a seventh threshold; or
when the access point determines that a distance between the station and itself is within a specified range according to the location information of the station to which the access point transmits the indication information,
the access point transmitting indication information of starting the dynamic channel detection to the station; and
if the above conditions are not satisfied, the access point transmitting indication information of stopping the dynamic channel detection to the station.

The method according to the embodiments of the present invention further includes: the access point transmitting indication information of stopping the dynamic channel detection when a first preset time length is reached to the station, herein
the first preset time length is a time length greater than or equal to 0.

The method according to the embodiments of the present invention further includes:
the access point transmitting indication information of starting the dynamic channel detection when a second preset time length is reached to the station, herein
the second preset time length is a time length greater than or equal to 0.

The method according to the embodiments of the present invention further includes:
the access point multicasting or broadcasting an indication of starting or stopping the dynamic channel detection to the station associated therewith to indicate the station associated therewith to start or stop the dynamic channel detection.

The method for processing dynamic channel detection according to the present invention will be described in detail through the following embodiments.

### Embodiment 6

In this embodiment, an access point AP and a plurality of stations STA associated therewith constitute a BSS. STA1 in the BSS transmits indication information to the AP for determining whether to update dynamic channel detection. After receiving the indication information, the AP responds a radio frame to the STA1 to allow the STA1 to use DSC and tells the STA1 to use new parameters such as a channel detection threshold, transmission power, a modulation mode etc. The STA1 updates its own channel detection threshold, transmission power and modulation mode according to the indication of the AP, and reports the state update result to the AP. The AP updates the local DSC state record.

### Embodiment 7

In this embodiment, an access point AP and a plurality of stations STA associated therewith constitute a BSS. STA1 in the BSS transmits indication information of starting dynamic channel detection to the AP. After receiving the request, the AP responds to the STA1 with a radio frame of not allowing the STA1 to use DSC according to a local predefined policy or an external instruction. The STA1 maintains a DSC state unchanged.

### Embodiment 8

In this embodiment, an access point AP and a plurality of stations STA associated therewith constitute a BSS. The AP multicasts or broadcasts starting of DSC. At this time, a DSC state of the STA1 is off, and the STA1 starts the DSC according to its own measurement data and reports to the AP. The AP updates the local DSC state record.

### Embodiment 9

In this embodiment, an access point AP and a plurality of stations STA associated therewith constitute a BSS. The AP multicasts or broadcasts starting of DSC. At this time, a DSC state of the STA1 is off and the STA1 maintains the DSC state unchanged according to its own measurement data.

### Embodiment 10

In this embodiment, an access point AP and a plurality of stations STA associated therewith constitute a BSS, The AP multicasts or broadcasts stopping of DSC. At this time, a DSC state of the STA1 is on, and the STA1 stops the DSC and reports to the AP. The AP updates the local DSC state record.

### Embodiment 11

In this embodiment, an access point AP and a plurality of stations STA associated therewith constitute a BSS, The AP multicasts or broadcasts stopping of DSC. At this time, a DSC state of the STA1 is off, and the STA1 maintains the DSC state unchanged.

### Embodiment 12

In this embodiment, an access point AP and a plurality of stations STA associated therewith constitute a BSS. The AP transmits indication information for starting the DSC to the STA1. At this time, a DSC state of the STA1 is off, and the STA1 starts the DSC according to its own measurement data and report to the AP. The AP updates the local DSC state record.

### Embodiment 13

In this embodiment, an access point AP and a plurality of stations STA associated therewith constitute a BSS. The AP transmits indication information for starting the DSC to the STA1. At this time, a DSC state of the STA1 is off and the STA1 maintains the DSC state unchanged according to its own measurement data.

### Embodiment 14

In this embodiment, an access point AP and a plurality of stations STA associated therewith constitute a BSS. The AP transmits indication information for stopping the DSC to the STA1. At this time, a DSC state of the STA1 is on, and the STA1 stops the DSC and reports to the AP. The AP updates the local DSC state record.

### Embodiment 15

In this embodiment, an access point AP and a plurality of stations STA associated therewith constitute a BSS. The AP transmits the indication information for stopping the DSC to the STA1. At this time, a DSC state of the STA1 is off and the STA maintains the DSC state unchanged according to its own detection information.

### Embodiment 16

In this embodiment, an access point AP and a plurality of stations STA associated therewith constitute a BSS. If the station updates the dynamic channel detection information, it reports the updated dynamic channel detection state to the AP and the AP updates the local DSC state record.

### Embodiment 17

In this embodiment, an access point AP and a plurality of stations STA associated therewith constitute a BSS. The AP transmits a notification message of indicating the STA to update the DSC parameters including a new channel detection threshold and related parameters, transmission power, and a modulation mode. After the STA updates the parameters, it transmits a DSC state update report. After receiving the report, the AP updates the DSC state or parameters of the STA which are locally stored.

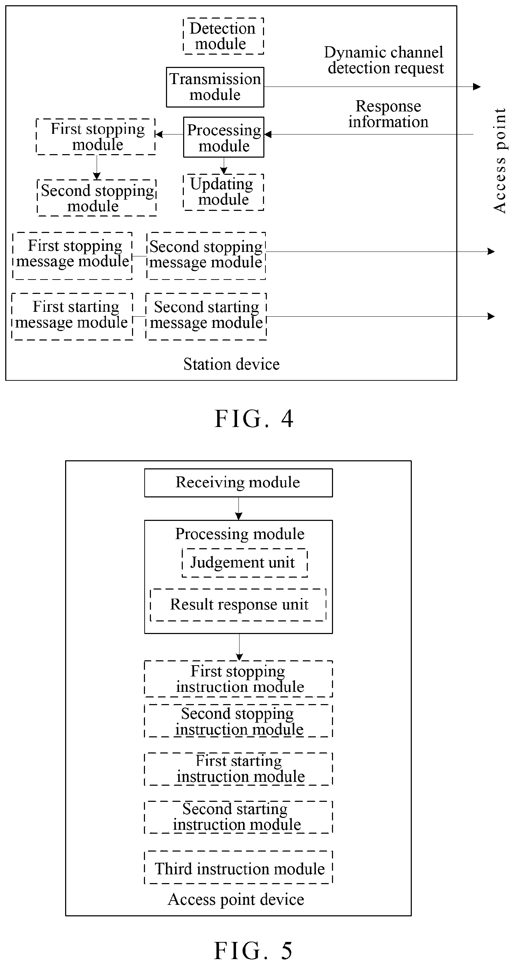

Fig. 4 is a diagram of a station device according to an embodiment of the present invention. As shown in Fig. 4, the station device according to the present embodiment includes:
a transmission module configured to transmit a dynamic channel detection request to an access point; and
a processing module configured to decide whether to use the dynamic channel detection according to response information from the access point.

In a preferable embodiment, the dynamic channel detection request transmitted by the transmission module is indicated through signaling of a physical layer or a medium access control layer of a radio frame.

In a preferable embodiment, the station device may further comprise:
a detection module configured to detect the following information:
   a number of surrounding legacy devices in a basic service set in which the station is located; and/or
   a number of devices in basic service sets other than a basic service set in which the station is located; and/or
   received signal strength of a signal transmitted by an access point of a neighboring basic service set; and/or
   received signal strength of a signal transmitted by an access point of a basic service set in which the station is located; and/or
   a mean value or a minimum value of received signal strength of a neighboring basic service set or a basic service set in which the station is located over a period of time; and/or
   a result of a specified operation of received signal strength of a signal transmitted by an access point of a neighboring basic service set and received signal strength of a signal transmitted by an access point of a basic service set in which the station is located; and/or
   location information; herein
   the dynamic channel detection request transmitted by the transmission module includes detection information of the detection module; and
   the specified operation includes:
      calculating a difference between a mean value or a minimum value of the received signal strength of the signal transmitted by the access point of the neighboring basic service set and a mean value or a minimum value of the received signal strength of the signal transmitted by the access point of the basic service set in which the station is located over a period of time; or
      calculating a ratio between a mean value or a minimum value of the received signal strength of the signal transmitted by the access point of the neighboring basic service set and a mean value or a minimum value of the received signal strength of the signal transmitted by the access point of the basic service set in which the station is located over a period of time.

The station device according to the embodiments of the present invention further includes an updating module configured to when the response information from the access point agrees to use the dynamic channel detection, update corresponding parameters according to a channel detection threshold and/or transmission power and/or a modulation mode of the station during data transmission indicated by the access point in the response indication which agrees to use the dynamic channel detection; or
updating the corresponding parameters according to a predefined policy.

The station device according to the embodiments of the present invention further includes a first stopping module configured to after the station uses the dynamic channel detection according to the response information, when the station receives a radio frame notifying stopping the dynamic channel detection transmitted by the access point, stop using the dynamic channel detection.

The station device according to the embodiments of the present invention further includes a first stopping module configured to after the station uses the dynamic channel detection according to the response information, when the station receives an indication indicating stopping the dynamic channel detection transmitted by the access point, stop using the dynamic channel detection.

The station device according to the embodiments of the present invention further includes a second stopping module configured to after the station uses the dynamic channel detection according to the response information, when the station receives an indication of stopping the dynamic channel detection when a first preset time length is reached transmitted by the access point, stop using the dynamic channel detection when the first preset time length is reached;
herein the first preset time length is a time length greater than or equal to 0.

The station device according to the embodiments of the present invention further includes a first stopping message module configured to when receiving an indication of stopping using the dynamic channel detection transmitted by the access point, transmit a radio frame to the access point to notify the access point that it has received an indication of stopping the dynamic channel detection and has stopped using the dynamic channel detection.

The station device according to the embodiments of the present invention further includes a second stopping message module is configured to when receiving an indication of stopping using the dynamic channel detection when a first preset time length is reached transmitted by the access point, transmit a radio frame to the access point to notify the access point that it has received an indication of stopping the dynamic channel detection when the first preset time length is reached and has stopped using the dynamic channel detection when the first preset time length is reached.

The station device according to the embodiments of the present invention further includes a first starting message module configured to when receiving an indication of starting dynamic channel detection transmitted by the access point, transmit a radio frame to the access point to notify the access point that it has received an indication of starting the dynamic channel detection and has started the dynamic channel detection.

The station device according to the embodiments of the present invention further includes a second starting message module is configured to when receiving an indication of starting the dynamic channel detection when a second preset time length is reached transmitted by the access point, transmit a radio frame to the access point to notify the access point that it has received an indication in the radio frame of starting the dynamic channel detection when a second preset time length is reached and has started the dynamic channel detection when the second preset time length is reached.

The second preset time length is a time length greater than or equal to 0.

Fig. 5 is a diagram of an access point device according to an embodiment of the present invention. As shown in FIG. 5, the access point device according to the present embodiment may comprise:
a receiving module configured to receive a dynamic channel detection request transmitted by a station; and
a processing module configured to judge whether to use the dynamic channel detection, and return a judgement result to the station.

In a preferable embodiment, the processing module includes a judgment unit configured to judge whether to use the dynamic channel detection according to an access number of legacy devices in the basic service set and detection information of the station; and
the detection information includes:
a detected number of surrounding legacy devices in a basic service set of the access point; and/or
a detected number of devices in basic service sets of other access points; and/or
detected received signal strength of a signal transmitted by an access point of a neighboring basic service set; and/or
detected received signal strength of a signal transmitted by an access point of a basic service set of the access point; and/or
a detected mean value or a detected minimum value of received signal strength of a neighboring basic service set or a basic service set of the access point over a period of time; and/or
a detected result of a specified operation of received signal strength of a signal transmitted by an access point of a neighboring basic service set and received signal strength of a signal transmitted by an access point of a basic service set of the access point; and/or
location information of the station.

In a preferable embodiment, the processing module further includes a result response unit configured to when it is found that a number of legacy stations in stations associated therewith at this time is less than or equal to a first threshold, or
when a number of surrounding legacy devices in a basic service set in which the station is located detected by the station and/or the number of devices in basic service sets other than a basic service set in which the station is located detected by the station is less than a second threshold; or
when received signal strength of a signal transmitted by an access point of a neighboring basic service set detected by the station and/or received signal strength of a signal transmitted by an access point of a basic service set in which the station is located received by the station is greater than a third threshold; or
when a result of a specified operation of received signal strength of a signal transmitted by an access point of a neighboring basic service set and received signal strength of a signal transmitted by an access point of a basic service set in which the station is located detected by the station is greater than a fourth threshold; or
when a mean value or a minimum value of received signal strength of a neighboring basic service set or a basic service set in which the station is located detected by the station over a period of time is greater than a fifth threshold value; or
when it is determined that a distance between the station and the access point device is within a specified range according to the location information of the station;
respond to the station with an indication of agreeing to use the dynamic channel detection; and
if the above conditions are not satisfied, respond to the station with an indication of disagreeing to use the dynamic channel detection.

In a preferable embodiment, the result response unit is further configured to when the response information responded to the station agrees to use the dynamic channel detection, indicate to the station a channel detection threshold and/or transmission power and/or a modulation mode of the station during data transmission in an indication of agreeing to use the dynamic channel detection responded to the station, so that after receiving the indication from the access point, the station updates corresponding parameters according to the channel detection threshold and/or the transmission power and/or the modulation mode indicated in the received radio frame; or
updates the corresponding parameters according to a predefined policy.

The access point device further includes a first stopping instruction module
configured to after the station uses the dynamic channel detection according to the judgment result, transmit an indication of stopping the dynamic channel detection to the station, so that after receiving the indication of stopping the dynamic channel detection, the station stops using the dynamic channel detection.

The access point device according to the embodiments of the present invention further includes a second stopping instruction module is configured to after the station uses the dynamic channel detection according to the judgment result, transmit an indication of stopping the dynamic channel detection when a first preset time length is reached to the station, so that after receiving the radio frame of stopping the dynamic channel detection when the first preset time length is reached, the station stops using the dynamic channel detection when the first preset time length is reached;
herein the first preset time length is a time length greater than or equal to 0.

The access point device according to the embodiments of the present invention further includes a first starting instruction module configured to when the station does not use the dynamic channel detection, transmit an indication of starting the dynamic channel detection to the station to indicate the station to start the dynamic channel detection.

The access point device according to the embodiments of the present invention further includes a second starting instruction module is configured to when the station does not use the dynamic channel detection, transmit an indication of starting the dynamic channel detection when a second preset time length is reached to the station to indicate the station to start the dynamic channel detection when the second preset time length is reached,
herein the second preset time length is a time length greater than or equal to 0.

The access point device according to the embodiments of the present invention further includes a third instruction module configured to transmit an indication of starting or stopping the dynamic channel detection to the station to indicate the station to start or stop the dynamic channel detection; or
broadcast an indication of starting or stopping the dynamic channel detection to the station associated therewith to indicate the station associated therewith to start or stop the dynamic channel detection.

The embodiments of the present invention further provide a station device for dynamic channel detection, including:
a state updating module configured to update a dynamic channel detection state according to a predefined policy.

The state updating module is further configured to update the dynamic channel detection state according to measurement data of the station itself, indication information of an access point, or indication information of other stations in communication with the station.

The indication information is information of starting dynamic channel detection or stopping the dynamic channel detection, and/or updating related parameters of the dynamic channel detection. Here, the related parameters comprise: related parameters of a dynamic channel detection threshold, related parameters of transmission power and related parameters of a modulation mode.

Alternatively, the measurement data of the station itself includes:
a number of surrounding legacy devices in a basic service set in which the station is located detected by the station; and/or
a number of devices in basic service sets other than a basic service set in which the station is located detected by the station; and/or
received signal strength of a signal transmitted by an access point of a neighboring basic service set detected by the station; and/or
received signal strength of a signal transmitted by an access point of a basic service set in which the station is located detected by the station; and/or
a mean value or a minimum value of received signal strength of a neighboring basic service set or a basic service set in which the station is located detected by the station over a period of time; and/or
an acquired result of a specified operation of received signal strength of a signal transmitted by an access point of a neighboring basic service set and received signal strength of a signal transmitted by an access point of a basic service set in which the station is located detected by the station; and/or
location information of the access point; and
the specified operation includes:
   calculating a difference between a mean value or a minimum value of the received signal strength of the signal transmitted by the access point of the neighboring basic service set and a mean value or a minimum value of the received signal strength of the signal transmitted by the access point of the basic service set in which the station is located over a period of time; or
   calculating a ratio between a mean value or a minimum value of the received signal strength of the signal transmitted by the access point of the neighboring basic service set and a mean value or a minimum value of the received signal strength of the signal transmitted by the access point of the basic service set in which the station is located over a period of time.

The station device further includes an update reporting module configured to after the state updating module updates the dynamic channel detection state, report the updated dynamic channel detection state to the access point.

Alternatively, the state updating module further includes an indication starting unit and an indication closure unit, herein
the starting judgment unit is configured to when the indication information is information of starting the dynamic channel detection, update the dynamic channel detection state according to the measurement data of the station itself; and
the ending judgment unit is configured to when the indication information is information of stopping the dynamic channel detection and the dynamic channel detection state of the station is a stopped state, not update the dynamic channel detection state of the station; and when the dynamic channel detection state of the station is a started state, update the dynamic channel detection state of the station to a stopped state of the dynamic channel detection.

The starting judgment unit is further configured to:
when a number of surrounding legacy devices in a basic service set in which the station is located detected by the station and/or the number of devices in basic service sets other than a basic service set in which the station is located detected by the station is less than a first threshold; or
when received signal strength of a signal transmitted by an access point of a neighboring basic service set detected by the station and/or received signal strength of a signal transmitted by an access point of a basic service set in which the station is located received by the station is greater than a second threshold; or
when an acquired result of a specified operation of received signal strength of a signal transmitted by an access point of a neighboring basic service set and received signal strength of a signal transmitted by an access point of a basic service set in which the station is located detected by the station is greater than a third threshold; or
when a mean value or a minimum value of received signal strength of a neighboring basic service set or a basic service set in which the station is located detected by the station over a period of time is greater than a fourth threshold value; or
when it is determined that a distance between the access point and itself is within a specified range according to the location information of the access point;
update the dynamic channel detection state to a started state of the dynamic channel detection; and
if the above conditions are not satisfied, update the dynamic channel detection state to a stopped state of the dynamic channel detection.

The station device according to the embodiments of the present invention further includes a second stopping module configured to: when receiving indication information of stopping the dynamic channel detection when a first preset time length is reached transmitted by the access point, stop the dynamic channel detection when the first preset time length is reached;
herein the first preset time length is a time length greater than or equal to 0.

The station device according to the embodiments of the present invention further includes a starting message module configured to:
when receiving indication information of starting the dynamic channel detection when a second preset time length is reached transmitted by the access point and updating the dynamic channel detection state to a started state of the dynamic channel detection according to the received indication information, start the dynamic channel detection when the second preset time length is reached;
herein the second preset time length is a time length greater than or equal to 0.

The embodiments of the present invention further provide an access point device for dynamic channel detection, including: an indication information module, configured to transmit indication information of updating a dynamic channel detection state to a station to indicate the station to update the dynamic channel detection state, herein
the indication information is starting dynamic channel detection or stopping the dynamic channel detection, and/or updating related parameters of the dynamic channel detection.

Here, the related parameters comprise related parameters of a dynamic channel detection threshold, related parameters of transmission power, and related parameters of a modulation mode.

The access point device further includes: a recording module configured to perform recording according to a state update of the dynamic channel detection reported by the station.

The access point device according to the embodiments of the present invention further includes: an indication basis module configured to transmit the indication information to the station according to a local predefined policy of the access point or an external instruction of the access point; herein
the local predefined policy of the access point includes a policy predefined according to local measurement data of the access point; and
the external instruction of the access point includes an instruction for a User Interface (UI).

Alternatively, the local measurement data of the access point includes:
a number of devices in basic service sets of other access points surrounding the access point; and/or
access points of a neighboring basic service set of the access point; and/or
received signal strength of a signal transmitted by a station of a neighboring basic service set; and/or
a number of legacy devices in the basic service set of the access point and/or a number of devices in basic service sets of other access points; and/or
location information of the station to which the access point transmits the indication information.

Alternatively, the indication information is indicated by signaling of a physical layer or signaling of a medium access control layer of a radio frame.

The indication basis module is further configured to:
when a number of devices in basic service sets of other access points surrounding the access point device is less than a fifth threshold; or
when access points of a neighboring basic service set of the access point device and/or received signal strength of a signal transmitted by a station of a neighboring basic service set is greater than a sixth threshold; or
when a number of legacy devices in the basic service set of the access point and/or a number of devices in basic service sets of other access points is less than a seventh threshold; or
when it is determined that a distance between the station and the access point is within a specified range according to the location information of the station to which the access point transmits the indication information,
transmit indication information of starting the dynamic channel detection to the station; and if the above conditions are not satisfied, transmit indication information of stopping the dynamic channel detection to the station, or transmit the indication information to the station according to an external instruction.

The access point device according to the embodiments of the present invention further includes: a second stopping instruction module, herein
the second stopping instruction module is configured to transmit indication information of stopping the dynamic channel detection when a first preset time length is reached to the station, herein
the first preset time length is a time length greater than or equal to 0.

The access point device according to the embodiments of the present invention further includes: a second starting instruction module configured to transmit indication information of starting the dynamic channel detection when a second preset time length is reached to the station, to indicate the station to start the dynamic channel detection when the second preset time length is reached, herein
the second preset time length is a time length greater than or equal to 0.

The access point device according to the embodiments of the present invention further includes: a third instruction module configured to multicast or broadcast indication information of starting or stopping the dynamic channel detection to the station associated therewith to indicate the station associated therewith to start or stop the dynamic channel detection.

It should be illustrated that what conditions to meet and when to inform the station to stop the dynamic channel detection are determined and implemented according to practical situations.

A person having ordinary skill in the art can understand that all or a part of steps in the above method can be implemented by programs instructing related hardware, which can be stored in a computer readable storage medium, such as a read-only memory, a disk or a disc etc. Alternatively, all or a part of steps in the above embodiments can also be implemented by one or more integrated circuits. Accordingly, various modules/units in the above embodiments can be implemented in the form of hardware, or can also be implemented in the form of software functional module. The present invention is not limited to any particular form of a combination of hardware and software.

The above description is merely preferable embodiments of the present invention. Of course, the present invention can have a plurality of other embodiments. Without departing from the spirit and substance of the present invention, those skilled in the art can make various corresponding changes and variations according to the present invention, and all these corresponding changes and variations should belong to the protection scope of the appended claims in the present invention.

### Industrial applicability

The embodiments of the present invention provide a method for processing dynamic channel detection, a station and an access point device. The method includes a station transmitting a dynamic channel detection request to an access point and the station deciding whether to use dynamic channel detection according to response information from the access point, which can enable the station and the access point to negotiate whether to use a dynamic channel detection threshold. This is advantageous in finding the best balance point between improvement of channel utilization and avoidance of collision.

## Claims

1. A method for processing dynamic channel detection, comprising:
a station transmitting a dynamic channel detection request to an access point; and
the station deciding whether to use the dynamic channel detection according to response information from the access point.

2. The method according to claim 1, wherein,
the dynamic channel detection request is indicated through signaling of a physical layer or a medium access control layer of a radio frame.

3. The method according to claim 1 or 2, wherein,
the dynamic channel detection request comprises detection information of the station, and
the detection information comprises:
the number of surrounding legacy devices in a basic service set in which the station is located detected by the station; and/or
the number of devices in basic service sets other than a basic service set in which the station is located detected by the station; and/or
received signal strength of a signal transmitted by an access point of a neighboring basic service set detected by the station; and/or
received signal strength of a signal transmitted by an access point of a basic service set in which the station is located detected by the station; and/or
a mean value or a minimum value of received signal strength of a neighboring basic service set or a basic service set in which the station is located detected by the station over a period of time; and/or
a result of a specified operation of received signal strength of a signal transmitted by an access point of a neighboring basic service set and received signal strength of a signal transmitted by an access point of a basic service set in which the station is located detected by the station; and/or
location information of the station.

4. The method according to claim 3, wherein, when the detection information comprises a result of a specified operation of received signal strength of a signal transmitted by an access point of a neighboring basic service set and received signal strength of a signal transmitted by an access point of a basic service set in which the station is located detected by the station,
the specified operation comprises:
calculating a difference between a mean value or a minimum value of the received signal strength of the signal transmitted by the access point of the neighboring basic service set and a mean value or a minimum value of the received signal strength of the signal transmitted by the access point of the basic service set in which the station is located over a period of time; or
calculating a ratio between a mean value or a minimum value of the received signal strength of the signal transmitted by the access point of the neighboring basic service set and a mean value or a minimum value of the received signal strength of the signal transmitted by the access point of the basic service set in which the station is located over a period of time.

5. The method according to claim 1, wherein when the response information is information of agreeing to use the dynamic channel detection, the method further comprises:
the station updating corresponding parameters according to a channel detection threshold and/or transmission power and/or a modulation mode of the station during data transmission indicated by the access point to the station in a response indication of agreeing to use the dynamic channel detection; or
updating the corresponding parameters according to a predefined policy.

6. The method according to claim 1, wherein after the station uses the dynamic channel detection according to the response information, the method further comprises:
when the station receives an indication of stopping the dynamic channel detection transmitted by the access point, stopping using the dynamic channel detection; or
when the station receives an indication of stopping the dynamic channel detection when a first preset time length is reached transmitted by the access point, stopping using the dynamic channel detection when the first preset time length is reached;
wherein the first preset time length is a time length greater than or equal to 0.

7. The method according to claim 6, wherein when the station receives an indication of stopping using the dynamic channel detection transmitted by the access point, the method further comprises:
the station transmitting a radio frame to the access point to notify the access point that the station has received the indication of stopping the dynamic channel detection and has stopped the dynamic channel detection; and
when the station receives an indication of stopping using the dynamic channel detection when a first preset time length is reached transmitted by the access point, the method further comprises:
the station transmitting a radio frame to the access point to notify the access point that the station has received the indication of stopping the dynamic channel detection when the first preset time length is reached and has stopped the dynamic channel detection when the first preset time length is reached.

8. The method according to claim 1, wherein when the station receives an indication of starting dynamic channel detection transmitted by the access point, the method further comprises:
the station transmitting a notification to the access point that the station has received the indication of starting the dynamic channel detection and has started the dynamic channel detection; and
when the station receives an indication of starting the dynamic channel detection when a second preset time length is reached transmitted by the access point, the method further comprises:
the station transmitting a notification to the access point that the station has received the indication of starting the dynamic channel detection when a second preset time length is reached and has started the dynamic channel detection when the second preset time length is reached;
wherein the second preset time length is a time length greater than or equal to 0.

9. A station device, comprising:
a transmission module configured to transmit a dynamic channel detection request to an access point; and
a processing module configured to decide whether to use a dynamic channel detection according to response information from the access point.

10. The station device according to claim 9, wherein,
the dynamic channel detection request transmitted by the transmission module is indicated through signaling of a physical layer or a medium access control layer of a radio frame.

11. The station device according to claim 9 or 10, further comprising:
a detection module configured to detect the following information:
the number of legacy devices in a basic service set in which the station is located surrounding the station; and/or
the number of devices in basic service sets in which other stations outside a basic service set in which the station is located are located; and/or
received signal strength of a signal transmitted by an access point of a neighboring basic service set; and/or
received signal strength of a signal transmitted by an access point of the basic service set in which the station is located; and/or
a mean value or a minimum value of received signal strength of the neighboring basic service set or the basic service set in which the station is located over a period of time; and/or
received signal strength of a signal transmitted by an access point of the neighboring basic service set; and/or
a result of a specified operation of received signal strength of a signal transmitted by an access point of a basic service set in which the station is located; and/or
location information; wherein
the dynamic channel detection request transmitted by the transmission module comprises detection information of the detection module; and
the specified operation comprises:
calculating a difference between a mean value or a minimum value of the received signal strength of the signal transmitted by the access point of the neighboring basic service set and a mean value or a minimum value of the received signal strength of the signal transmitted by the access point of the basic service set in which the station is located over a period of time; or
calculating a ratio between a mean value or a minimum value of the received signal strength of the signal transmitted by the access point of the neighboring basic service set and a mean value or a minimum value of the received signal strength of the signal transmitted by the access point of the basic service set in which the station is located over a period of time.

12. The station device according to claim 9, further comprising an updating module configured to, when the response information from the access point is information of agreeing to use the dynamic channel detection, update corresponding parameters according to a channel detection threshold and/or transmission power and/or a modulation mode of the station during data transmission, indicated by the access point, in the response indication in the radio frame which agrees to use the dynamic channel detection; or
updating the corresponding parameters according to a predefined policy.

13. The station device according to claim 9, further comprising a first stopping module and a second stopping module, wherein
the first stopping module is configured to, after the station uses the dynamic channel detection according to the response information, when the station receives an indication of stopping the dynamic channel detection transmitted by the access point, stop using the dynamic channel detection; and
the second stopping module is configured to, after the station uses the dynamic channel detection according to the response information, when the station receives an indication of stopping the dynamic channel detection when a first preset time length is reached transmitted by the access point, stop using the dynamic channel detection when the first preset time length is reached;
wherein the first preset time length is a time length greater than or equal to 0.

14. The station device according to claim 13, further comprising a first stopping message module and a second stopping message module, wherein
the first stopping message module is configured to, when receiving an indication of stopping using the dynamic channel detection transmitted by the access point, transmit a notification to the access point that the station device has received the indication of stopping the dynamic channel detection and has stopped using the dynamic channel detection; and
the second stopping message module is configured to, when receiving the indication of stopping using the dynamic channel detection when a first preset time length is reached transmitted by the access point, transmit a notification to the access point that the station device has received the indication of stopping the dynamic channel detection when the first preset time length is reached and has stopped using the dynamic channel detection when the first preset time length is reached.

15. The station device according to claim 9, further comprising a first starting message module and a second starting message module, wherein
the first starting message module is configured to, when receiving an indication of starting dynamic channel detection transmitted by the access point, transmit a notification to the access point that the station device has received an indication of starting the dynamic channel detection and has started the dynamic channel detection; and
the second starting message module is configured to, when receiving the indication of starting the dynamic channel detection when a second preset time length is reached transmitted by the access point, transmit a notification to the access point that the station device has received an indication in the radio frame of starting the dynamic channel detection when a second preset time length is reached and has started the dynamic channel detection when the second preset time length is reached;
wherein the second preset time length is a time length greater than or equal to 0.

16. A method for processing dynamic channel detection, comprising:
an access point receiving a dynamic channel detection request transmitted by a station; and
the access point judging whether to use the dynamic channel detection, and returning a judgement result to the station.

17. The method according to claim 16, wherein the access point judging whether to use the dynamic channel detection comprises: judging whether to use the dynamic channel detection according to the access number of legacy devices in a basic service set of the access point and detection information of the station; and
the detection information of the station comprises:
the number of surrounding legacy devices in a basic service set in which the station is located detected by the station; and/or
the number of devices in basic service sets in which other stations outside a basic service set in which the station is located are located detected by the station; and/or
received signal strength of a signal transmitted by an access point of a neighboring basic service set detected by the station; and/or
received signal strength of a signal transmitted by an access point of a basic service set in which the station is located detected by the station; and/or
a mean value or a minimum value of received signal strength of a neighboring basic service set or a basic service set in which the station is located detected by the station over a period of time; and/or
a result of a specified operation of received signal strength of a signal transmitted by an access point of a neighboring basic service set and received signal strength of a signal transmitted by an access point of a basic service set in which the station is located detected by the station; and/or
location information of the station.

18. The method according to claim 17, wherein the access point judging whether to use the dynamic channel detection and returning a judgment result to the station comprises:
when the access point finds that the number of legacy stations in stations associated therewith at this time is less than or equal to a first threshold, or
when the number of surrounding legacy devices in a basic service set in which the station is located detected by the station and/or the number of devices in basic service sets in which other stations outside a basic service set in which the station is located are located detected by the station is less than a second threshold; or
when received signal strength of a signal transmitted by an access point of a neighboring basic service set detected by the station and/or received signal strength of a signal transmitted by an access point of a basic service set in which the station is located detected by the station is greater than a third threshold; or
when a result of a specified operation of received signal strength of a signal transmitted by an access point of a neighboring basic service set and received signal strength of a signal transmitted by an access point of a basic service set in which the station is located detected by the station is greater than a fourth threshold; or
when a mean value or a minimum value of received signal strength of a neighboring basic service set or a basic service set in which the station is located detected by the station over a period of time is greater than a fifth threshold; or
when the access point determines that a distance between the station and itself is within a specified range according to the location information of the station;
the access point responding to the station with information of agreeing to use the dynamic channel detection; and
if the above conditions are not satisfied, the access point responding to the station with information of disagreeing to use the dynamic channel detection.

19. The method according to claim 18, wherein when the response information responded by the access point to the station agrees to use the dynamic channel detection, the method further comprises:
the access point indicating to the station a channel detection threshold and/or transmission power and/or a modulation mode of the station during data transmission in a radio frame of agreeing to use the dynamic channel detection responded to the station.

20. The method according to claim 16, wherein after the station uses the dynamic channel detection according to the judgment result, the method further comprises: the access point transmitting an indication of stopping the dynamic channel detection to the station; and after receiving the indication of stopping the dynamic channel detection, the station stopping using the dynamic channel detection; or
the access point transmitting an indication of stopping the dynamic channel detection when a first preset time length is reached to the station; and after receiving the indication of stopping the dynamic channel detection when the first preset time length is reached, the station stopping using the dynamic channel detection when the first preset time length is reached;
wherein the first preset time length is a time length greater than or equal to 0.

21. The method according to claim 16, wherein when the station does not use the dynamic channel detection, the method further comprises:
the access point transmitting an indication of starting the dynamic channel detection to the station to indicate the station to start the dynamic channel detection; or
the access point transmitting an indication of starting the dynamic channel detection when a second preset time length is reached to the station to indicate the station to start the dynamic channel detection when the second preset time length is reached,
wherein the second preset time length is a time length greater than or equal to 0.

22. The method according to claim 16, further comprising:
the access point multicasting or broadcasting an indication of starting or stopping the dynamic channel detection to the station associated with the access point to indicate the station associated with the access point to start or stop the dynamic channel detection.

23. An access point device, comprising:
a receiving module configured to receive a dynamic channel detection request transmitted by a station; and
a processing module configured to judge whether to use a dynamic channel detection, and return a judgement result to the station.

24. The access point device according to claim 23, wherein the processing module comprises a judgment unit configured to judge whether to use the dynamic channel detection according to the access number of legacy devices in a basic service set of the access point and detection information of the station; and
the detection information comprises:
the detected number of surrounding legacy devices in a basic service set in which the station is located; and/or
the detected number of devices in basic service sets in which other stations outside a basic service set in which the station is located are located; and/or
detected received signal strength of a signal transmitted by an access point of a neighboring basic service set; and/or
detected received signal strength of a signal transmitted by an access point of the basic service set in which the station is located; and/or
a detected mean value or a detected minimum value of received signal strength of the neighboring basic service set or the basic service set in which the station is located over a period of time; and/or
a detected result of a specified operation of received signal strength of a signal transmitted by an access point of the neighboring basic service set and received signal strength of a signal transmitted by an access point of the basic service set in which the station is located; and/or
location information of the station.

25. The access point device according to claim 24, wherein the processing module further comprises a result response unit configured to, when it is found that the number of legacy stations in stations associated therewith at this time is less than or equal to a first threshold, or
when the number of surrounding legacy devices in the basic service set in which the station is located detected by the station and/or the number of devices in basic service sets other than a basic service set in which the station is located detected by the station is less than a second threshold; or
when received signal strength of a signal transmitted by an access point of the neighboring basic service set detected by the station and/or received signal strength of a signal transmitted by an access point of the basic service set in which the station is located detected by the station is greater than a third threshold; or
when a result of a specified operation of received signal strength of a signal transmitted by an access point of the neighboring basic service set and received signal strength of a signal transmitted by an access point of the basic service set in which the station is located detected by the station is greater than a fourth threshold; or
when a mean value or a minimum value of received signal strength of the neighboring basic service set or the basic service set in which the station is located detected by the station over a period of time is greater than a fifth threshold; or
when it is determined that a distance between the station and the access point device is within a specified range according to the location information of the station;
respond to the station with information of agreeing to use the dynamic channel detection; and
if the above conditions are not satisfied, respond to the station with information of disagreeing to use the dynamic channel detection.

26. The access point device according to claim 25, wherein the result response unit is further configured to, when information responded to the station is information of agreeing to use the dynamic channel detection, indicate to the station a channel detection threshold, transmission power and a modulation mode of the station during data transmission in an indication of agreeing to use the dynamic channel detection responded to the station, so that after receiving a radio frame from the access point, the station updates corresponding parameters according to the channel detection threshold and/or the transmission power and/or the modulation mode indicated in the received indication; or
update the corresponding parameters according to a predefined policy.

27. The access point device according to claim 23, further comprising a first stopping instruction module and a second stopping instruction module, wherein
the first stopping instruction module is configured to, after the station uses the dynamic channel detection according to a judgment result, transmit an indication of stopping the dynamic channel detection to the station, so that after receiving the indication of stopping the dynamic channel detection, the station stops using the dynamic channel detection; and
the second stopping instruction module is configured to, after the station uses the dynamic channel detection according to the judgment result, transmit an indication of stopping the dynamic channel detection when a first preset time length is reached to the station, so that after receiving the indication of stopping the dynamic channel detection when the first preset time length is reached, the station stops using the dynamic channel detection when the first preset time length is reached;
wherein the first preset time length is a time length greater than or equal to 0.

28. The access point device according to claim 23, further comprising a first starting instruction module, a second starting instruction module and a third instruction module, wherein
the first starting instruction module is configured to, when the station does not use the dynamic channel detection, transmit an indication of starting the dynamic channel detection to the station to indicate the station to start the dynamic channel detection; and
the second starting instruction module is configured to, when the station does not use the dynamic channel detection, transmit an indication of starting the dynamic channel detection when a second preset time length is reached to the station to indicate the station to start the dynamic channel detection when the second preset time length is reached,
wherein the second preset time length is a time length greater than or equal to 0.

29. The access point device according to claim 23, further comprising a third instruction module, configured to multicast or broadcast an indication of starting or stopping the dynamic channel detection to the station associated with the access point device to indicate the station associated with the access point device to start or stop the dynamic channel detection.

30. A method for processing dynamic channel detection, comprising:
a station updating a dynamic channel detection state according to a predefined policy.

31. The method according to claim 30, wherein the predefined policy comprises:
measurement data of the station, indication information of an access point, or indication information of other stations in communication with the station; and
wherein the indication information is information of starting dynamic channel detection or ending the dynamic channel detection, and/or updating related parameters of the dynamic channel detection.

32. The method according to claim 30 or 31, wherein after the station updates the dynamic channel detection state, the method further comprises: reporting the updated dynamic channel detection state to the access point.

33. The method according to claim 31, wherein when the indication information is information of starting the dynamic channel detection, the station updating a dynamic channel detection state according to a predefined policy comprises the station determining whether to update the dynamic channel detection state according to the measurement data of itself; and
when the indication information is information of ending the dynamic channel detection, the station updating a dynamic channel detection state according to a predefined policy comprises: when the dynamic channel detection state of the station is an ended state, the station not updating the dynamic channel detection; and when the dynamic channel detection state of the station is a started state, updating the dynamic channel detection state of the station to an ended state of the dynamic channel detection.

34. The method according to claim 31, wherein the measurement data of the station comprises:
the number of surrounding legacy devices in a basic service set in which the station is located detected by the station; and/or
the number of devices in basic service sets in which other stations outside the basic service set in which the station is located are located detected by the station; and/or
received signal strength of a signal transmitted by an access point of a neighboring basic service set detected by the station; and/or
received signal strength of a signal transmitted by an access point of the basic service set in which the station is located detected by the station; and/or
a mean value or a minimum value of received signal strength of the neighboring basic service set or the basic service set in which the station is located detected by the station over a period of time; and/or
an acquired result of a specified operation of received signal strength of a signal transmitted by an access point of the neighboring basic service set and received signal strength of a signal transmitted by an access point of the basic service set in which the station is located detected by the station; and/or
location information of the access point.

35. The method according to claim 34, wherein the specified operation comprises:
calculating a difference between a mean value or a minimum value of the received signal strength of the signal transmitted by the access point of the neighboring basic service set and a mean value or a minimum value of the received signal strength of the signal transmitted by the access point of the basic service set in which the station is located over a period of time; or
calculating a ratio between a mean value or a minimum value of the received signal strength of the signal transmitted by the access point of the neighboring basic service set and a mean value or a minimum value of the received signal strength of the signal transmitted by the access point of the basic service set in which the station is located over a period of time.

36. The method according to claim 34, wherein the station updating the dynamic channel detection state according to the measurement data of itself comprises:
when the number of surrounding legacy devices in the basic service set in which the station is located detected by the station and/or the number of devices in basic service sets other than the basic service set in which the station is located detected by the station is less than a first threshold; or
when received signal strength of the signal transmitted by the access point of the neighboring basic service set detected by the station and/or received signal strength of the signal transmitted by the access point of the basic service set in which the station is located detected by the station is greater than a second threshold; or
when an acquired result of a specified operation of received signal strength of the signal transmitted by the access point of the neighboring basic service set and received signal strength of the signal transmitted by the access point of the basic service set in which the station is located detected by the station is greater than a third threshold; or
when a mean value or a minimum value of received signal strength of the neighboring basic service set or the basic service set in which the station is located detected by the station over a period of time is greater than a fourth threshold; or
when it is determined that a distance between the access point and itself is within a specified range according to the location information of the access point;
the station updating the dynamic channel detection state to a started state of the dynamic channel detection; and
if the above conditions are not satisfied, updating the dynamic channel detection state of the station to an ended state of the dynamic channel detection.

37. The method according to claim 31, wherein the related parameters comprise:
related parameters of a dynamic channel detection threshold, related parameters of transmission power and related parameters of a modulation mode.

38. The method according to claim 30, further comprising:
when the station receives indication information of ending the dynamic channel detection when a first preset time length is reached transmitted by the access point, the station ending the dynamic channel detection when the first preset time length is reached;
wherein the first preset time length is a time length greater than or equal to 0.

39. The method according to claim 33, comprising:
when the station receives indication information of starting the dynamic channel detection when a second preset time length is reached transmitted by the access point and updates the dynamic channel detection state to a started state of the dynamic channel detection according to the received indication information, the station starting the dynamic channel detection when the second preset time length is reached;
wherein the second preset time length is a time length greater than or equal to 0.

40. A station device for dynamic channel detection, comprising:
a state updating module configured to update a dynamic channel detection state according to a predefined policy.

41. The station device according to claim 40, wherein the state updating module is further configured to update the dynamic channel detection state according to measurement data of the station, indication information of an access point, or indication information of other stations in communication with the station; and
wherein the indication information is information of starting dynamic channel detection or ending the dynamic channel detection, and/or updating related parameters of the dynamic channel detection.

42. The station device according to claim 40 or 41, further comprising an update reporting module configured to, after the state updating module updates the dynamic channel detection state, report the updated dynamic channel detection state to the access point.

43. The station device according to claim 41, wherein the state updating module further comprises an indication starting unit and an indication closure unit, wherein
the starting judgment unit is configured to, when the indication information is information of starting the dynamic channel detection, update the dynamic channel detection state according to the measurement data of the station itself; and
the ending judgment unit is configured to, when the indication information is information of ending the dynamic channel detection and the dynamic channel detection state of the station is an ended state, not update the dynamic channel detection state of the station; and when the dynamic channel detection state of the station is a started state, update the dynamic channel detection state of the station to an ended state of the dynamic channel detection.

44. The station device according to claim 41, wherein the measurement data of the station comprises:
the number of surrounding legacy devices in a basic service set in which the station is located detected by the station; and/or
the number of devices in basic service sets in which other stations outside the basic service set in which the station is located are located detected by the station; and/or
received signal strength of a signal transmitted by an access point of a neighboring basic service set detected by the station; and/or
received signal strength of a signal transmitted by an access point of the basic service set in which the station is located detected by the station; and/or
a mean value or a minimum value of received signal strength of the neighboring basic service set or the basic service set in which the station is located detected by the station over a period of time; and/or
an acquired result of a specified operation of received signal strength of a signal transmitted by an access point of the neighboring basic service set and received signal strength of a signal transmitted by an access point of the basic service set in which the station is located detected by the station; and/or
location information of the access point; and
the specified operation comprises:
calculating a difference between a mean value or a minimum value of the received signal strength of the signal transmitted by the access point of the neighboring basic service set and a mean value or a minimum value of the received signal strength of the signal transmitted by the access point of the basic service set in which the station is located over a period of time; or
calculating a ratio between a mean value or a minimum value of the received signal strength of the signal transmitted by the access point of the neighboring basic service set and a mean value or a minimum value of the received signal strength of the signal transmitted by the access point of the basic service set in which the station is located over a period of time.

45. The station device according to claim 44, wherein the starting judgment unit is further configured to:
when the number of surrounding legacy devices in the basic service set in which the station is located detected by the station and/or the number of devices in basic service sets other stations outside the basic service set in which the station is located are located detected by the station is less than a first threshold; or
when received signal strength of the signal transmitted by the access point of the neighboring basic service set detected by the station and/or received signal strength of the signal transmitted by the access point of the basic service set in which the station is located detected by the station is greater than a second threshold; or
when an acquired result of a specified operation of received signal strength of the signal transmitted by the access point of the neighboring basic service set and received signal strength of the signal transmitted by the access point of the basic service set in which the station is located detected by the station is greater than a third threshold; or
when a mean value or a minimum value of received signal strength of the neighboring basic service set or the basic service set in which the station is located detected by the station over a period of time is greater than a fourth threshold; or
when it is determined that a distance between the access point and itself is within a specified range according to the location information of the access point;
update the dynamic channel detection state to a started state of the dynamic channel detection; and
if the above conditions are not satisfied, update the dynamic channel detection state to an ending state of the dynamic channel detection.

46. The station device according to claim 41, wherein the related parameters comprise:
related parameters of a dynamic channel detection threshold, related parameters of transmission power and related parameters of a modulation mode.

47. The station device according to claim 40, further comprising a second stopping module configured to:
when receiving indication information of ending the dynamic channel detection when a first preset time length is reached transmitted by the access point, end the dynamic channel detection when the first preset time length is reached;
wherein the first preset time length is a time length greater than or equal to 0.

48. The station device according to claim 43, further comprising a starting message module configured to:
when receiving indication information of starting the dynamic channel detection when a second preset time length is reached transmitted by the access point and updating the dynamic channel detection state to a started state of the dynamic channel detection according to the received indication information, start the dynamic channel detection when the second preset time length is reached;
wherein the second preset time length is a time length greater than or equal to 0.

49. A method for processing dynamic channel detection, comprising: an access point transmitting indication information of updating a dynamic channel detection state to a station to indicate the station to update the dynamic channel detection state, wherein
the indication information is starting dynamic channel detection or ending the dynamic channel detection, and/or updating related parameters of the dynamic channel detection.

50. The method according to claim 49, further comprising: the access point performing recording according to a state update of the dynamic channel detection reported by the station.

51. The method according to claim 49, wherein before the method, the following steps are further comprised:
the access point transmitting the indication information to the station according to a local predefined policy of the access point or an external instruction of the access point; wherein
the local predefined policy of the access point comprises a policy predefined according to local measurement data of the access point; and
the external instruction of the access point comprises an instruction for a User Interface, UI.

52. The method according to claim 49, wherein the indication information is indicated by signaling of a physical layer or signaling of a medium access control layer of a radio frame.

53. The method according to claim 51, wherein the local measurement data of the access point comprises:
the number of devices in basic service sets of other access points surrounding the access point; and/or
access points of a neighboring basic service set of the access point; and/or
received signal strength of a signal transmitted by a station of a neighboring basic service set; and/or
the number of legacy devices in the basic service set of the access point and/or the number of devices in basic service sets of other access points; and/or
location information of the station to which the access point transmits the indication information.

54. The method according to claim 51, wherein the access point transmitting the indication information to the station according to a local predefined policy of the access point comprises:
when the number of devices in basic service sets of other access points surrounding the access point is less than a fifth threshold; or
when access points of a neighboring basic service set of the access point and/or received signal strength of a signal transmitted by a station of a neighboring basic service set is greater than a sixth threshold; or
when the number of legacy devices in the basic service set of the access point and/or the number of devices in basic service sets of other access points is less than a seventh threshold; or
when the access point determines that a distance between the station and the access point is within a specified range according to the location information of the station to which the access point transmits the indication information,
the access point transmitting indication information of starting the dynamic channel detection to the station; and
if the above conditions are not satisfied, the access point transmitting indication information of ending the dynamic channel detection to the station.

55. The method according to claim 49, wherein the related parameters comprise related parameters of a dynamic channel detection threshold, related parameters of transmission power, and related parameters of a modulation mode.

56. The method according to claim 49, further comprising: the access point transmitting indication information of stopping the dynamic channel detection when a first preset time length is reached to the station, wherein
the first preset time length is a time length greater than or equal to 0.

57. The method according to claim 49, further comprising:
the access point transmitting indication information of starting the dynamic channel detection when a second preset time length is reached to the station, wherein
the second preset time length is a time length greater than or equal to 0.

58. The method according to claim 49, further comprising:
the access point multicasting or broadcasting an indication of starting or stopping the dynamic channel detection to the station associated with the access point to indicate the station associated with the access point to start or stop the dynamic channel detection.

59. An access point device for dynamic channel detection, comprising: an indication information module, configured to transmit indication information of updating a dynamic channel detection state to a station to indicate the station to update the dynamic channel detection state, wherein
the indication information is starting dynamic channel detection or stopping the dynamic channel detection, and/or updating related parameters of the dynamic channel detection.

60. The access point device according to claim 59, further comprising: a recording module configured to perform recording according to a state update of the dynamic channel detection reported by the station.

61. The access point device according to claim 59, further comprising an indication basis module configured to transmit the indication information to the station according to a local predefined policy of the access point or an external instruction of the access point; wherein
the local predefined policy of the access point comprises a policy predefined according to local measurement data of the access point; and
the external instruction of the access point comprises an instruction for a User Interface, UI.

62. The access point device according to claim 59, wherein the indication information is indicated by signaling of a physical layer or signaling of a medium access control layer of a radio frame.

63. The access point device according to claim 61, wherein the local measurement data of the access point comprises:
the number of devices in basic service sets of other access points surrounding the access point; and/or
access points of a neighboring basic service set of the access point; and/or
received signal strength of a signal transmitted by a station of a neighboring basic service set; and/or
the number of legacy devices in the basic service set of the access point and/or the number of devices in basic service sets of other access points; and/or
location information of the station to which the access point transmits the indication information.

64. The access point device according to claim 61, wherein the indication basis module is further configured to:
when the number of devices in basic service sets of other access points surrounding the access point device is less than a fifth threshold; or
when access points of a neighboring basic service set of the access point device and/or received signal strength of a signal transmitted by a station of a neighboring basic service set is greater than a sixth threshold; or
when the number of legacy devices in the basic service set of the access point and/or the number of devices in basic service sets of other access points is less than a seventh threshold; or
when it is determined that a distance between the station and the access point is within a specified range according to the location information of the station to which the access point device transmits the indication information,
transmit indication information of starting the dynamic channel detection to the station; and if the above conditions are not satisfied, transmit indication information of ending the dynamic channel detection to the station, or transmit the indication information to the station according to an external instruction.

65. The access point device according to claim 59, wherein the related parameters comprise related parameters of a dynamic channel detection threshold, related parameters of transmission power, and related parameters of a modulation mode.

66. The access point device according to claim 59, further comprising: a second stopping instruction module, configured to transmit indication information of stopping the dynamic channel detection when a first preset time length is reached to the station, wherein
the first preset time length is a time length greater than or equal to 0.

67. The access point device according to claim 59, further comprising: a second starting instruction module configured to transmit indication information of starting the dynamic channel detection when a second preset time length is reached to the station, to indicate the station to start the dynamic channel detection when the second preset time length is reached, wherein
the second preset time length is a time length greater than or equal to 0.

68. The access point device according to claim 59, further comprising: a third instruction module configured to multicast or broadcast indication information of starting or stopping the dynamic channel detection to the station associated with the access point to indicate the station associated with the access point to start or stop the dynamic channel detection.

69. A computer program comprising program instructions which, when executed by a processor of a station device, enable the station device to perform the method according to any of claims 1-8.

70. A carrier carrying the computer program according to claim 69.

71. A computer program comprising program instructions which, when executed by a processor of an access point device, enable the access point device to perform the method according to any of claims 16-22.

72. A carrier carrying the computer program according to claim 71.

73. A computer program comprising program instructions which, when executed by a processor of a station device, enable the station device to perform the method according to any of claims 30-39.

74. A carrier carrying the computer program according to claim 73.

75. A computer program comprising program instructions which, when executed by a processor of an access point device, enable the access point device to perform the method according to any of claims 49-58.

76. A carrier carrying the computer program according to claim 75.
